# EUROPEAN PATENT SPECIFICATION

(11) **EP 3 611 988 B1**
(45) Date of publication and mention of the grant of the patent: **31.03.2021**
(21) Application number: 18794371.7
(22) Date of filing: 27.04.2018
(51) Int. Cl.: H04W 72/12, H04W 72/14

(54) **DATA PACKET TRANSMISSION METHOD AND DEVICE**
DATENPAKETÜBERTRAGUNGSVERFAHREN UND -VORRICHTUNG
PROCÉDÉ ET DISPOSITIF DE TRANSMISSION DE PAQUETS DE DONNÉES

(30) Priority: 05.05.2017 CN 201710315394
(43) Date of publication of application: 19.02.2020
(73) Proprietor: Huawei Technologies Co., Ltd., Longgang District Shenzhen, Guangdong 518129 (CN)
(72) Inventor: LIU, Hang, Shenzhen Guangdong 518129 (CN); LI, Mingchao, Shenzhen Guangdong 518129 (CN); WANG, Hejun, Shenzhen Guangdong 518129 (CN)
(74) Representative: Epping - Hermann - Fischer
(86) International application number: PCT/CN2018/084956
(87) International publication number: WO 2018/201992

(56) References cited:
- WO-A1-2014/186956
- WO-A1-2017/026667
- CN-A- 102 612 093
- CN-A- 104 065 409
- HUAWEI ET AL: "LCP with Multiple Numerologies", 3GPP DRAFT; R2-1702602, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, Washington, USA; 20170403 - 20170407 3 April 2017 (2017-04-03), XP051244604, Retrieved from the Internet: URL:http://www.3gpp.org/ftp/Meetings_3GPP_ SYNC/RAN2/Docs/ [retrieved on 2017-04-03]
- INTERDIGITAL COMMUNICATIONS: "Logical Channel Prioritization for NR", 3GPP DRAFT; R2-1702871 (R15 NR WI AI10315 MAC LCP MULTIPLEXING), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051244851, Retrieved from the Internet: URL:http://www.3gpp.org/ftp/Meetings_3GPP_ SYNC/RAN2/Docs/ [retrieved on 2017-04-03]
- QUALCOMM INCORPORATED: "LCP with Multiple Numerologies", 3GPP DRAFT; R2-1704903 LCP WITH MULITPLE NUMEROLOGIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 4 May 2017 (2017-05-04), XP051263643, Retrieved from the Internet: URL:http://www.3gpp.org/ftp/tsg_ran/WG2_RL 2/TSGR2_98/Docs/ [retrieved on 2017-05-04]

## Description

### TECHNICAL FIELD

The present invention relates to the field of data transmission, and in particular to, a data packet transmission method and a device.

### BACKGROUND

In a conventional communications system, a single user has a plurality of different types of services at the same time, and these services require different quality of service (QoS) such as a latency and a rate. Services with different QoS requirements are usually allocated to different logical channels. Some logical channels have a relatively high data transmission priority, and some logical channels have a relatively low data transmission priority. If scheduling is performed in a round robin manner, quality of service of a service corresponding to a logical channel with a high data transmission priority may be difficult to satisfy. If a service requirement corresponding to a logical channel with a high data transmission priority is always satisfied preferentially, a service requirement corresponding to a logical channel with a low data transmission priority may not be satisfied for a long time.

In long term evolution (LTE), when an uplink scheduling resource (Uplink grant) arrives, data on different logical channels may be multiplexed to one media access control protocol data unit (MAC PDU). A logical channel has a fixed data transmission priority, and data packets are multiplexed by using a token bucket mechanism. In this manner, transmission of a service on a logical channel with a high data transmission priority can be preferentially ensured, and transmission of a service on a logical channel with a low data transmission priority can also be ensured. However, a main disadvantage of this manner is that data packets with different QoS requirements are loaded into one MAC PDU, and the MAC PDU is sent at a physical layer by using a same transmission parameter. If services with different QoS requirements on logical channels are transmitted by using a same parameter, it is difficult to match a service with a resource.

Document R2-1702602, "LCP with Multiple Numerologies" from Huawei and HiSilicon, 3GPP TSG-RAN WG2 #97bis, Spokane, Washington, USA, 3-7 April, 2017, Agenda item: 10.3.1.5, discusses that in NR different numerology is used to obtain the performance-overhead balance for different services. For the delay sensitive service, like URLLC, numerology with reduced TTI is adopted to transmit and retransmit the URLLC data earlier at the cost of more control signalling. For the delay tolerable service, like eMBB, numerology with long TTI is adopted due to the enlarged maximum size of block of resource can be scheduled by a single control message. The network or the gNB can provide differentiated QoS to different logical channel via mapping between the logical channel and the numerology/TTI, and giving those logical channels proper priorities.

### SUMMARY

The present invention is defined by the attached set of claims.

Embodiments of the present invention provide a data packet transmission method and a device. The method and the device can be used to determine a priority of a logical channel, to ensure transmission of data on a logical channel with a high priority, and avoid a waste of resources, thereby matching a resource with a service to the utmost.

According to a first aspect, it is provided a data packet transmission method, including:
receiving, by a terminal device, uplink scheduling resource configuration information sent by a base station, where the uplink scheduling resource configuration information includes information used to indicate an uplink scheduling resource to be used by the terminal device and information used to indicate a physical communication characteristic of the uplink scheduling resource;
determining, by the terminal device, a data transmission priority corresponding to each of N logical channels;
loading, by the terminal device, data on M logical channels in the N logical channels into a MAC PDU based on the data transmission priority corresponding to each of the N logical channels, where M is an integer less than or equal to N; and
sending, by the terminal device, the MAC PDU on the uplink scheduling resource by using the physical communication characteristic of the uplink scheduling resource.

In comparison with the prior art, in the present invention, data transmission priorities of logical channels are determined with reference to the information used to indicate the physical communication characteristic of the uplink scheduling resource, and then data on the logical channels is loaded into the MAC PDU based on an order of the data transmission priorities of the logical channels. This ensures transmission of data on a logical channel with a high priority, and avoids a waste of resources, thereby matching a resource with a service to the utmost.

In a feasible embodiment, the determining, by the terminal device, a data transmission priority corresponding to each of N logical channels specifically includes:
when a first priority of a logical channel A is higher than a first priority of a logical channel B, determining, by the terminal device, that a data transmission priority of the logical channel A is a first data transmission priority and that a data transmission priority of the logical channel B is a second data transmission priority, where
the first data transmission priority is higher than the second data transmission priority, to be specific, data on the logical channel A is preferentially loaded into the MAC PDU, and the logical channel A and the logical channel B are any two of the N logical channels; and
the first priority of the logical channel A is configured by the base station by using radio resource control RRC signaling or a system information block SIB or is preconfigured on the terminal device side, and the first priority of the logical channel B is configured by the base station by using the RRC signaling or the SIB or is preconfigured on the terminal device side.

In a feasible embodiment, the first priority of the logical channel A may be a latency requirement of the data on the logical channel A; and when the latency requirement of the data on the logical channel A is lower than a latency requirement of data on the logical channel B, the terminal device determines that the first priority of the logical channel A is higher than the first priority of the logical channel B.

The latency requirement of the data on the logical channel may include but is not limited to one or more of an end-to-end latency requirement of a data packet on the logical channel, a unidirectional transmission latency requirement of the data packet on the logical channel, an air interface transmission latency requirement of the data packet on the logical channel, and a transmission time interval (TTI) requirement of the data packet on the logical channel; and
the latency requirement of the data on the logical channel may be configured by the base station by using the RRC signaling or the SIB or is preconfigured on the terminal device side.

In a feasible embodiment, before the determining, by the terminal device, a data transmission priority corresponding to each of N logical channels, the method further includes:
receiving, by the terminal device, a correspondence sent by the base station, where the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, and N1 is an integer less than or equal to N.

The base station sends the correspondence between the logical channel and the physical communication characteristic to the terminal device, to make preparations for subsequent priority determining.

In an aspect, the determining, by the terminal device, a data transmission priority corresponding to each of N logical channels specifically includes:
when any one of at least one physical communication characteristic corresponding to the logical channel A is consistent with the physical communication characteristic of the uplink scheduling resource, and no corresponding physical communication characteristic is configured for the logical channel B, or
when any one of at least one physical communication characteristic corresponding to the logical channel A is consistent with the physical communication characteristic of the uplink scheduling resource, and each of at least one physical communication characteristic corresponding to the logical channel B is inconsistent with the physical communication characteristic of the uplink scheduling resource,
determining, by the terminal device, that the data transmission priority of the logical channel A is the first data transmission priority and that the data transmission priority of the logical channel B is the second data transmission priority, where
the first data transmission priority is higher than the second data transmission priority, to be specific, the data on the logical channel A is preferentially loaded into the MAC PDU, and the logical channel A and the logical channel B are any two of the N logical channels;
that no corresponding physical communication characteristic is configured for the logical channel B means that the correspondence does not include a correspondence between the logical channel B and a physical communication characteristic; and
a single logical channel may correspond to one or more physical communication characteristics.

In an aspect, the determining, by the terminal device, a data transmission priority corresponding to each of N logical channels specifically includes:
when any one of at least one physical communication characteristic corresponding to the logical channel A and any one of at least one physical communication characteristic corresponding to the logical channel B are consistent with the physical communication characteristic of the uplink scheduling resource, or
when each of at least one physical communication characteristic corresponding to the logical channel A and each of at least one physical communication characteristic corresponding to the logical channel B are inconsistent with the physical communication characteristic of the uplink scheduling resource, or
when no corresponding physical communication characteristic is configured for the logical channel A or the logical channel B,
determining, by the terminal device, a second priority of the logical channel A and a second priority of the logical channel B; and
when the second priority of the logical channel A is higher than the second priority of the logical channel B, determining, by the terminal device, that the data transmission priority of the logical channel A is the first data transmission priority and that the data transmission priority of the logical channel B is the second data transmission priority, where
the first data transmission priority is higher than the second data transmission priority, to be specific, the data on the logical channel A is preferentially loaded into the MAC PDU, the second priority of the logical channel A is configured by the base station by using the RRC signaling or the SIB or is preconfigured on the terminal device side, the second priority of the logical channel B is configured by the base station by using the RRC signaling or the SIB or is preconfigured on the terminal device side, and the second priority may be the same as or different from the first priority;
that no corresponding physical communication characteristic is configured for the logical channel A means that the correspondence does not include a correspondence between the logical channel A and a physical communication characteristic; and
that no corresponding physical communication characteristic is configured for the logical channel B means that the correspondence does not include a correspondence between the logical channel B and a physical communication characteristic.

The physical communication characteristics corresponding to the logical channels and the physical communication characteristic of the uplink scheduling resource are introduced, the data transmission priorities of the logical channels can be precisely determined based on the physical communication characteristics corresponding to the logical channels and the physical communication characteristic of the uplink scheduling resource, and the terminal device loads the data on the logical channels into the MAC PDU based on an order of the data transmission priorities of the logical channels. This ensures transmission of data on a logical channel with a high priority, and avoids a waste of resources, thereby matching a resource with a service to the utmost.

In an aspect, physical communication characteristics corresponding to the logical channel A are classified into a default physical communication characteristic and/or an optional physical communication characteristic, physical communication characteristics corresponding to the logical channel B are classified into a default physical communication characteristic and/or an optional physical communication characteristic, and the determining, by the terminal device, a data transmission priority corresponding to each of N logical channels specifically includes:
when any one of at least one default physical communication characteristic corresponding to the logical channel A and any one of at least one default physical communication characteristic corresponding to the logical channel B are consistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and each of at least one optional physical communication characteristic corresponding to the logical channel A and each of at least one optional physical communication characteristic corresponding to the logical channel B are inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and any one of at least one optional physical communication characteristic corresponding to the logical channel A and any one of at least one optional physical communication characteristic corresponding to the logical channel B are consistent with the physical communication characteristic of the uplink scheduling resource,
determining, by the terminal device, a second priority of the logical channel A and a second priority of the logical channel B; and
when the second priority of the logical channel A is higher than the second priority of the logical channel B, determining, by the terminal device, that the data transmission priority of the logical channel A is the first data transmission priority and that the data transmission priority of the logical channel B is the second data transmission priority, to be specific, preferentially loading the data on the logical channel A into the MAC PDU, where
the default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, the logical channel A and the logical channel B are any two of the N logical channels, the second priority of the logical channel A is configured by the base station by using the RRC signaling or the SIB or is preconfigured on the terminal device side, and the second priority of the logical channel B is configured by the base station by using the RRC signaling or the SIB or is preconfigured on the terminal device side;
that any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic;
that any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel B and the default physical communication characteristic and/or a correspondence between the logical channel A and the optional physical communication characteristic;
the logical channel A or B may correspond to one or more default physical communication characteristics; and
the logical channel A or B may correspond to one or more optional physical communication characteristics.

In a feasible embodiment, the determining, by the terminal device, a data transmission priority corresponding to each of N logical channels specifically includes:
when any one of at least one default physical communication characteristic corresponding to the logical channel A is consistent with the physical communication characteristic of the uplink scheduling resource, and each of at least one default physical communication characteristic corresponding to the logical channel B is inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, any one of at least one optional physical communication characteristic corresponding to the logical channel A is consistent with the physical communication characteristic of the uplink scheduling resource, and each of at least one optional physical communication characteristic corresponding to the logical channel B is inconsistent with the physical communication characteristic of the uplink scheduling resource,
determining, by the terminal device, that the data transmission priority of the logical channel A is the first data transmission priority and that the data transmission priority of the logical channel B is the second data transmission priority, where the first data transmission priority is higher than the second data transmission priority, to be specific, the data on the logical channel A is preferentially loaded into the MAC PDU;
the default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, the logical channel A and the logical channel B are any two of the N logical channels, the second priority of the logical channel A is configured by the base station by using the RRC signaling or the SIB or is preconfigured on the terminal device side, and the second priority of the logical channel B is configured by the base station by using the RRC signaling or the SIB or is preconfigured on the terminal device side;
that any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic;
that any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic;
the logical channel A or B may correspond to one or more default physical communication characteristics; and
the logical channel A or B may correspond to one or more optional physical communication characteristics.

The default physical communication characteristic and the optional physical communication characteristic corresponding to the logical channel are introduced, so that the terminal device can further precisely determine the data transmission priority of the logical channel.

In a feasible embodiment, the correspondence further includes a probability P₁ corresponding to the optional physical communication characteristic corresponding to the logical channel A, and the method further includes:
when the physical communication characteristic of the uplink scheduling resource is consistent with the optional physical communication characteristic corresponding to the logical channel A, loading, by the terminal device, the data on the logical channel A into the MAC PDU based on the probability P₁.

In a feasible embodiment, the method further includes:
when the uplink scheduling resource does not satisfy a latency requirement of data on a logical channel C, skipping loading, by the terminal device, the data on the logical channel C into the MAC PDU, where
the logical channel C is any one of the N logical channels, and the latency requirement of the data on the logical channel may include but is not limited to one or more of an end-to-end latency requirement of a data packet on the logical channel, a unidirectional transmission latency requirement of the data packet on the logical channel, an air interface transmission latency requirement of the data packet on the logical channel, and a TTI requirement of the data packet on the logical channel; and
the latency requirement of the data on the logical channel may be configured by the base station by using the RRC signaling or the SIB or is preconfigured on the terminal device side.

The terminal device determines whether the uplink scheduling resource satisfies the latency requirement of the data on the logical channel, to ensure QoS of the data on the logical channel. In a feasible embodiment, the correspondence further includes a probability P₂ corresponding to an optional physical communication characteristic corresponding to the logical channel D, and the method further includes:
when the optional physical communication characteristic corresponding to the logical channel D is consistent with the physical communication characteristic of the uplink scheduling resource, and the uplink scheduling resource satisfies a latency requirement of data on the logical channel D, loading, by the terminal device, the data on the logical channel D into the MAC PDU based on the probability P₂, where the logical channel D is any one of the N logical channels.

According to a second aspect, an embodiment of the present invention provides a data packet transmission method, including:
sending, by a base station, uplink scheduling resource configuration information to a terminal device, where the uplink scheduling resource configuration information includes information used to indicate an uplink scheduling resource to be used by the terminal device and information used to indicate a physical communication characteristic of the uplink scheduling resource; and
receiving, by the base station, a MAC PDU sent by the terminal device.

In a feasible embodiment, the base station sends a correspondence to the terminal device, where
the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, and N1 is an integer less than or equal to N.

In a feasible embodiment, the base station sends RRC signaling to the terminal device, where the RRC signaling is used to configure at least one of a first priority, a second priority, and a latency requirement for each of N logical channels.

In a feasible embodiment, the base station sends a SIB to the terminal device, where the SIB is used to configure at least one of a first priority, a second priority, and a latency requirement for each of N logical channels.

According to a third aspect, it is provided a terminal device, including:
a first receiving module, configured to receive uplink scheduling resource configuration information sent by a base station, where the uplink scheduling resource configuration information includes information used to indicate an uplink scheduling resource to be used by the terminal device and information used to indicate a physical communication characteristic of the uplink scheduling resource;
a determining module, configured to determine a data transmission priority corresponding to each of N logical channels;
a first loading module, configured to load data on M logical channels in the N logical channels into a MAC PDU based on the data transmission priority corresponding to each of the N logical channels, where M is an integer less than or equal to N; and
a sending module, configured to send the MAC PDU to the base station on the uplink scheduling resource by using the physical communication characteristic of the uplink scheduling resource.

In an aspect, the determining module is specifically configured to:
when a first priority of a logical channel A is higher than a first priority of a logical channel B, determine, for the terminal device, that a data transmission priority of the logical channel A is a first data transmission priority and that a data transmission priority of the logical channel B is a second data transmission priority, where
the first data transmission priority is higher than the second data transmission priority, to be specific, data on the logical channel A is preferentially loaded into the MAC PDU, and the logical channel A and the logical channel B are any two of the N logical channels; and
the first priority of the logical channel A is configured by the base station by using radio resource control RRC signaling or a system information block SIB or is preconfigured on the terminal device side, and the first priority of the logical channel B is configured by the base station by using the RRC signaling or the SIB or is preconfigured on the terminal device side.

In a feasible embodiment, before the determining module determines the data transmission priority corresponding to each of the N logical channels, the terminal device further includes:
a second receiving module, configured to receive a correspondence sent by the base station, where the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, N1 is an integer less than or equal to N, and the second receiving module may be the same as or different from the first receiving module.

In a feasible embodiment, the determining module is specifically configured to:
when any one of at least one physical communication characteristic corresponding to the logical channel A is consistent with the physical communication characteristic of the uplink scheduling resource, and no corresponding physical communication characteristic is configured for the logical channel B, or
when any one of at least one physical communication characteristic corresponding to the logical channel A is consistent with the physical communication characteristic of the uplink scheduling resource, and each of at least one physical communication characteristic corresponding to the logical channel B is inconsistent with the physical communication characteristic of the uplink scheduling resource,
determine that the data transmission priority of the logical channel A is the first data transmission priority and that the data transmission priority of the logical channel B is the second data transmission priority, where
the first data transmission priority is higher than the second data transmission priority, to be specific, the data on the logical channel A is preferentially loaded into the MAC PDU, and the logical channel A and the logical channel B are any two of the N logical channels.

In a feasible embodiment, the determining module is specifically configured to:
when any one of at least one physical communication characteristic corresponding to the logical channel A and any one of at least one physical communication characteristic corresponding to the logical channel B are consistent with the physical communication characteristic of the uplink scheduling resource, or
when each of at least one physical communication characteristic corresponding to the logical channel A and each of at least one physical communication characteristic corresponding to the logical channel B are inconsistent with the physical communication characteristic of the uplink scheduling resource, or
when no corresponding physical communication characteristic is configured for the logical channel A or the logical channel B,
determine a second priority of the logical channel A and a second priority of the logical channel B; and
when the second priority of the logical channel A is higher than the second priority of the logical channel B, determine that the data transmission priority of the logical channel A is the first data transmission priority and that the data transmission priority of the logical channel B is the second data transmission priority, to be specific, preferentially load the data on the logical channel A into the MAC PDU, where
the first data transmission priority is higher than the second data transmission priority, the second priority of the logical channel A is configured by the base station by using the RRC signaling or the SIB or is preconfigured on the terminal device side, the second priority of the logical channel B is configured by the base station by using the RRC signaling or the SIB or is preconfigured on the terminal device side, and the second priority is the same as or different from the first priority.

In an aspect, physical communication characteristics corresponding to the logical channel A are classified into a default physical communication characteristic and/or an optional physical communication characteristic, physical communication characteristics corresponding to the logical channel B are classified into a default physical communication characteristic and/or an optional physical communication characteristic, and the determining module is specifically configured to:
when any one of at least one default physical communication characteristic corresponding to the logical channel A and any one of at least one default physical communication characteristic corresponding to the logical channel B are consistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and each of at least one optional physical communication characteristic corresponding to the logical channel A and each of at least one optional physical communication characteristic corresponding to the logical channel B are inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and any one of at least one optional physical communication characteristic corresponding to the logical channel A and any one of at least one optional physical communication characteristic corresponding to the logical channel B are consistent with the physical communication characteristic of the uplink scheduling resource,
determine, for the terminal device, a second priority of the logical channel A and a second priority of the logical channel B; and
when the second priority of the logical channel A is higher than the second priority of the logical channel B, determine that the data transmission priority of the logical channel A is the first data transmission priority and that the data transmission priority of the logical channel B is the second data transmission priority, where
the default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, and the logical channel A and the logical channel B are any two of the N logical channels;
that any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic;
that any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic;
the logical channel A or B may correspond to one or more default physical communication characteristics;
the logical channel A or B may correspond to one or more optional physical communication characteristics; and
the second priority of the logical channel A is configured by the base station by using the RRC signaling or the SIB or is preconfigured on the terminal device side, and the second priority of the logical channel B is configured by the base station by using the RRC signaling or the SIB or is preconfigured on the terminal device side.

In a feasible embodiment, the determining module is specifically configured to:
when any one of at least one default physical communication characteristic corresponding to the logical channel A is consistent with the physical communication characteristic of the uplink scheduling resource, and each of at least one default physical communication characteristic corresponding to the logical channel B is inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, any one of at least one optional physical communication characteristic corresponding to the logical channel A is consistent with the physical communication characteristic of the uplink scheduling resource, and each of at least one optional physical communication characteristic corresponding to the logical channel B is inconsistent with the physical communication characteristic of the uplink scheduling resource,
determine that the data transmission priority of the logical channel A is the first data transmission priority and that the data transmission priority of the logical channel B is the second data transmission priority, where the first data transmission priority is higher than the second data transmission priority, to be specific, the data on the logical channel A is preferentially loaded into the MAC PDU;
the default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, and the logical channel A and the logical channel B are any two of the N logical channels;
that any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic;
that any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic;
the logical channel A or B may correspond to one or more default physical communication characteristics; and
the logical channel A or B may correspond to one or more optional physical communication characteristics.

In a feasible embodiment, the correspondence further includes a probability P₁ corresponding to the optional physical communication characteristic corresponding to the logical channel A, and the terminal device further includes:
a second loading module, configured to: when the physical communication characteristic of the uplink scheduling resource is consistent with the optional physical communication characteristic corresponding to the logical channel A, load, by the terminal device, the data on the logical channel A into the MAC PDU based on the probability Pi, where the second loading module may be the same as or different from the first loading module.

In a feasible embodiment, the terminal device further includes:
a third loading module, configured to: when the uplink scheduling resource does not satisfy a latency requirement of data on a logical channel C, skip loading, by the terminal device, the data on the logical channel C into the MAC PDU, where the third loading module may be the same as or different from the first loading module, and the third loading module may be the same as or different from the second loading module;
the logical channel C is any one of the N logical channels, and the latency requirement of the data on the logical channel may include but is not limited to one or more of an end-to-end latency requirement of a data packet on the logical channel, a unidirectional transmission latency requirement of the data packet on the logical channel, an air interface transmission latency requirement of the data packet on the logical channel, and a TTI requirement of the data packet on the logical channel; and
the latency requirement of the data on the logical channel may be configured by the base station by using the RRC signaling or the SIB or is preconfigured on the terminal device side.

In a feasible embodiment, the correspondence further includes a probability P₂ corresponding to an optional physical communication characteristic corresponding to the logical channel D, and the terminal device further includes:
a fourth loading module, configured to: when the optional physical communication characteristic corresponding to the logical channel D is consistent with the physical communication characteristic of the uplink scheduling resource, and the uplink scheduling resource satisfies a latency requirement of data on the logical channel D, load, by the terminal device, the data on the logical channel D into the MAC PDU based on the probability P₂, where the logical channel D is any one of the N logical channels, the fourth loading module may be the same as or different from the first loading module, the fourth loading module may be the same as or different from the second loading module, and the fourth loading module may be the same as or different from the third loading module.

According to a fourth aspect, it is provided a base station, including:
a first sending module, configured to send uplink scheduling resource configuration information to a terminal device, where the uplink scheduling resource configuration information includes information used to indicate an uplink scheduling resource to be used by the terminal device and information used to indicate a physical communication characteristic of the uplink scheduling resource; and
a receiving module, configured to receive a MAC PDU sent by the terminal device.

In a feasible embodiment, the base station further includes:
a second sending module, configured to send a correspondence to the terminal device, where
the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, N1 is an integer less than or equal to N, and the second sending module may be the same as or different from the first sending module.

In an aspect, the base station further includes: a third sending module, configured to send RRC signaling to the terminal device, where the RRC signaling is used to configure at least one of a first priority, a second priority, and a latency requirement for each of N logical channels, the third sending module may be the same as or different from the first sending module, and the third sending module may be the same as or different from the second sending module.

In a feasible embodiment, the base station further includes:
a fourth sending module, configured to send a SIB to the terminal device, where the SIB is used to configure at least one of a first priority, a second priority, and a latency requirement for each of N logical channels, the fourth sending module may be the same as or different from the first sending module, the fourth sending module may be the same as or different from the second sending module, and the fourth sending module may be the same as or different from the third sending module.

According to a fifth aspect, it is provided a terminal device, including:
a memory that stores executable program code; and
a processor coupled to the memory, where
the processor invokes the executable program code stored in the memory, to perform some or all of the steps described in the first aspect of the embodiments of the present invention. According to a sixth aspect, an embodiment of the present invention provides a base station, including:
a memory that stores executable program code; and
a processor coupled to the memory, where
the processor invokes the executable program code stored in the memory, to perform some or all of the steps described in the second aspect of the embodiments of the present invention.

In an aspect, the terminal device receives the uplink scheduling resource configuration information sent by the base station, where the uplink scheduling resource configuration information includes the information used to indicate the uplink scheduling resource to be used by the terminal device and the information used to indicate the physical communication characteristic of the uplink scheduling resource; next, the terminal device determines the data transmission priority corresponding to each of the N logical channels; then, the terminal device loads the data on the M logical channels in the N logical channels into the MAC PDU based on the data transmission priority corresponding to each of the N logical channels, where M is an integer less than or equal to N; and finally, the terminal device sends the MAC PDU to the base station on the uplink scheduling resource by using the physical communication characteristic of the uplink scheduling resource.

In comparison with the prior art, in the present invention, the physical communication characteristic is introduced, a data transmission priority of a logical channel is determined based on the physical communication characteristic, and data on the logical channel is transmitted based on the data transmission priority of the logical channel. This helps ensure transmission of data on a logical channel with a high priority, and avoids a waste of resources, thereby matching a resource with a service to the utmost.

These or other aspects of the present invention are more concise and comprehensible in descriptions of the following embodiments.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a schematic diagram of an application scenario of a data packet transmission method according to an embodiment of the present invention;
FIG. 2 is a schematic flowchart of a data packet transmission method according to an embodiment of the present invention;
FIG. 3 is a schematic flowchart of another data packet transmission method according to an embodiment of the present invention;
FIG. 4 is a schematic structural diagram of a terminal device according to an embodiment of the present invention;
FIG. 5 is a schematic structural diagram of a base station according to an embodiment of the present invention;
FIG. 6 is a schematic structural diagram of another terminal device according to an embodiment of the present invention; and
FIG. 7 is a schematic structural diagram of another base station according to an embodiment of the present invention.

### DESCRIPTION OF EMBODIMENTS

The following describes the embodiments of the present invention in detail with reference to the accompanying drawings.

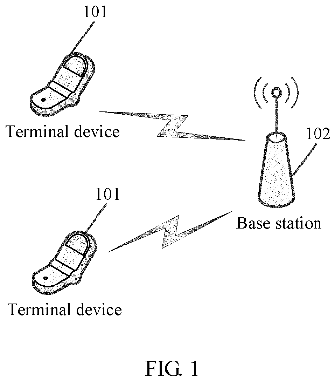

FIG. 1 is a schematic diagram of an application scenario of a data packet transmission method according to an embodiment of the present invention. As shown in FIG. 1, the application scenario includes a terminal device 101 and a base station 102. The terminal device 101 and the base station 102 transmit data to each other through wireless communication.

The terminal device 101 is also referred to as user equipment (UE), and is a device providing voice and/or data connectivity for a user, for example, a handheld device or a vehicle-mounted device having a wireless connection function. Common terminals include, for example, a mobile phone, a tablet computer, a notebook computer, a palmtop computer, a mobile internet device (MID), and a wearable device such as a smartwatch, a smart band, or a pedometer.

The base station 102 may be a macro base station, a micro base station, a pico base station, a distributed base station, or another type of base station.

Before the terminal device 101 sends a data packet to the base station 102, the base station 102 sends configuration information to the terminal device 101. The terminal device 101 determines data transmission priorities of logical channels based on a physical communication characteristic of an uplink scheduling resource in the configuration information and physical communication characteristics corresponding to the logical channels, and then the terminal device 101 loads data on the logical channels into a MAC PDU based on an order of the data transmission priorities of the logical channels, and sends the MAC PDU to the base station 102 on the uplink scheduling resource by using the physical communication characteristic of the uplink scheduling resource. The physical communication characteristic is also referred to as a "Numerology". The physical communication characteristic is a set of different parameters used in a communications system corresponding to the physical communication characteristic. The physical communication characteristic corresponds to but is not limited to one or more of the following parameters: a subcarrier spacing (subframe spacing, also referred to as a subcarrier spacing), a cyclic prefix (CP) length, a quantity of symbols (Symbol), a resource block (RB) location, slot duration, and a frame format. Different physical communication characteristics may correspond to different parameters described above.

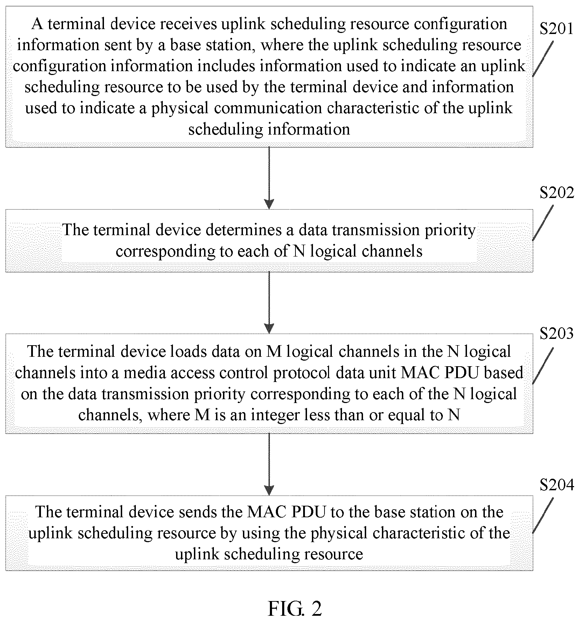

FIG. 2 is a schematic flowchart of a data packet method according to the present invention. As shown in FIG. 2, the method includes the following steps.

S201. A terminal device receives uplink scheduling resource configuration information sent by a base station, where the uplink scheduling resource configuration information includes information used to indicate an uplink scheduling resource to be used by the terminal device and information used to indicate a physical communication characteristic of the uplink scheduling resource.

The information used to indicate the uplink scheduling resource includes information such as a time-frequency location of the uplink scheduling resource.

The information used to indicate the physical communication characteristic of the uplink scheduling resource may be a physical communication characteristic identifier of the uplink scheduling resource or the physical communication characteristic of the uplink scheduling resource.

The physical communication characteristic identifier of the uplink scheduling resource is used to indicate a corresponding physical communication characteristic.

Optionally, the physical communication characteristic identifier of the uplink scheduling resource may be used to obtain the corresponding physical communication characteristic through calculation. For example, it is assumed that the physical communication characteristic includes only a subcarrier spacing, and the subcarrier spacing may be obtained through calculation according to a formula 15 kHz × 2*ⁿ*, where n may be a nonnegative integer or a negative integer. In this case, the physical communication characteristic identifier may be n.

S202. The terminal device determines a data transmission priority corresponding to each of N logical channels.

Specifically, that the terminal device determines a data transmission priority corresponding to each of N logical channels specifically includes:
when a first priority of a logical channel A is higher than a first priority of a logical channel B, determining, by the terminal device, that a data transmission priority of the logical channel A is a first data transmission priority and that a data transmission priority of the logical channel B is a second data transmission priority.

The first data transmission priority is higher than the second data transmission priority, to be specific, data on the logical channel A is preferentially loaded into the MAC PDU, and the logical channel A and the logical channel B are any two of the N logical channels.

The first priority of the logical channel A is configured by the base station by using RRC signaling or a SIB or is preconfigured on the terminal device side, and the first priority of the logical channel B is configured by the base station by using the RRC signaling or the SIB or is preconfigured on the terminal device side.

The first priority may be used to determine a data transmission priority of a logical channel.

Optionally, the first priority of the logical channel A is configured for the logical channel by sending the RRC signaling or the SIB by the base station to the terminal device, and the first priority of the logical channel B is configured for the logical channel A and the logical channel B by sending the RRC signaling or the SIB by the base station to the terminal device.

Optionally, the first priority of the logical channel A is preconfigured on the terminal device side, and the first priority of the logical channel B is preconfigured on the terminal device side.

Optionally, the first priority of the logical channel A may be a latency requirement of the data on the logical channel A. When the latency requirement of the data on the logical channel A is lower than a latency requirement of data on the logical channel B, the first priority of the logical channel A is higher than the first priority of the logical channel B.

The latency requirement of the data on the logical channel may include but is not limited to one or more of an end-to-end latency requirement of a data packet on the logical channel, a unidirectional transmission latency requirement of the data packet on the logical channel, an air interface transmission latency requirement of the data packet on the logical channel, and a TTI requirement of the data packet on the logical channel. The latency requirement of the data packet on the logical channel may be configured by the base station by using the RRC signaling or the SIB or is preconfigured on the terminal device side.

For example, if air interface transmission latency requirements of data packets on the logical channel A and the logical channel B are 0.5 ms and 1 ms, respectively, the first priority of the logical channel A is higher than the first priority of the logical channel B, to be specific, the terminal device preferentially loads the data on the logical channel A into the MAC PDU.

The latency requirement of the data on the logical channel may be configured by the base station by using the RRC signaling or the SIB or is preconfigured on the terminal device side.

Before the terminal device determines the data transmission priority corresponding to each of the N logical channels, the method further includes:
receiving, by the terminal device, a correspondence sent by the base station, where the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, and N1 is an integer less than or equal to N.

It should be noted that, that the physical communication characteristic is used to indicate a physical layer parameter that is preferentially used when data on a corresponding logical channel is sent specifically means that the terminal device preferentially selects the physical layer parameter indicated by the physical communication characteristic to transmit the data on the logical channel.

Specifically, the correspondence between the N1 logical channels in the N logical channels and the physical communication characteristic may be a correspondence between each of the N logical channels and a physical communication characteristic, or may be a correspondence between some logical channels (namely, the N1 logical channels) in the N logical channels and a physical communication characteristic.

It should be noted that, because no physical communication characteristic is configured for some of the N logical channels, the correspondence may be the correspondence between each of the N1 logical channels and the physical communication characteristic.

N is an integer greater than or equal to 1, and N1 is an integer less than or equal to N.

The correspondence may be explicit or implicit. This is not limited in the present invention. Optionally, the correspondence may be shown in Table 1. Table 1 is a table of a correspondence between a logical channel identifier and a physical communication characteristic identifier.

**Table 1**

| | |
|---|---|
| Identifier of a logical channel 1 | Physical communication characteristic identifier 1 and physical communication characteristic identifier 2 |
| Identifier of a logical channel 2 | Physical communication characteristic identifier 3 |

Specifically, the terminal device determines, based on the correspondence between the logical channel identifier and the physical communication characteristic identifier, a physical communication characteristic corresponding to a logical channel. The logical channel identifier is used to indicate a corresponding logical channel, and the physical communication characteristic identifier is used to indicate a corresponding physical communication characteristic.

Optionally, the correspondence may be shown in Table 2. Table 2 is a table of a correspondence between a logical channel identifier and a physical communication characteristic.

**Table 2**

| | |
|---|---|
| Identifier of a logical channel 1 | Physical communication characteristic 1 and physical communication characteristic 2 |
| Identifier of a logical channel 2 | Physical communication characteristic 3 |

Specifically, the terminal device determines, based on the correspondence between the logical channel identifier and the physical communication characteristic, a physical communication characteristic corresponding to a logical channel. The logical channel identifier is used to indicate a corresponding logical channel.

Optionally, the correspondence may be shown in Table 3. Table 3 is a table of a correspondence between a logical channel and a physical communication characteristic.

**Table 3**

| | |
|---|---|
| Logical channel 1 | Physical communication characteristic 1 and physical communication characteristic 2 |
| Logical channel 2 | Physical communication characteristic 3 |

Specifically, the terminal device determines, based on the correspondence between the logical channel and the physical communication characteristic, a physical communication characteristic corresponding to a logical channel.

Optionally, the correspondence may be shown in Table 4. Table 4 is a table of a correspondence between a logical channel and a physical communication characteristic identifier.

**Table 4**

| | |
|---|---|
| Logical channel 1 | Physical communication characteristic identifier 1 and physical communication characteristic identifier 2 |
| Logical channel 2 | Physical communication characteristic identifier 3 |

Specifically, the terminal device determines, based on the correspondence between the logical channel and the physical communication characteristic identifier, a physical communication characteristic corresponding to a logical channel. The physical communication characteristic identifier is used to indicate a corresponding physical communication characteristic.

Optionally, the correspondence may be shown in Table 5. Table 5 is a physical communication characteristic order table.

**Table 5**

| |
|---|
| Physical communication characteristic 1 and physical communication characteristic 2 |
| Physical communication characteristic 3 |
| |
| Physical communication characteristic 4 |

The physical communication characteristics in Table 5 are sequentially sorted in an order of logical channel identifiers, and each row corresponds to one logical channel. The physical communication characteristics may be sorted in ascending order of the logical channel identifiers or in descending order of the logical channel identifiers.

Optionally, the correspondence may be shown in Table 6. Table 6 is a physical communication characteristic identifier order table.

**Table 6**

| |
|---|
| Identifier of a physical communication characteristic 1 and identifier of a physical communication characteristic 2 |
| Identifier of a physical communication characteristic 3 |
| |
| Identifier of a physical communication characteristic 4 |

The physical communication characteristic identifiers in Table 6 are sequentially sorted in an order of logical channel identifiers, and each row corresponds to one logical channel. The physical communication characteristic identifiers may be sorted in ascending order of the logical channel identifiers or in descending order of the logical channel identifiers.

Optionally, the base station adds a physical communication characteristic identifier or a physical communication characteristic to a message for configuring a logical channel.

The logical channel identifier is used to indicate a corresponding logical channel, and the physical communication characteristic identifier is used to indicate a corresponding physical communication characteristic.

Optionally, the physical communication characteristic identifier may be used to obtain the corresponding physical communication characteristic through calculation. For example, it is assumed that the physical communication characteristic includes only a subcarrier spacing, and the subcarrier spacing may be obtained through calculation according to a formula 15 kHz × 2*ⁿ*, where n may be a nonnegative integer or a negative integer. In this case, the physical communication characteristic identifier may be n.

Based on any one or a combination of the optional manners shown in Table 1 to Table 6, the terminal device may obtain a physical communication characteristic corresponding to a logical channel. Another manner of obtaining the correspondence between the logical channel and the physical communication characteristic may alternatively be used in the present invention.

According to the present invention, that the terminal device determines a data transmission priority corresponding to each of N logical channels specifically includes:
when any one of at least one physical communication characteristic corresponding to the logical channel A is consistent with the physical communication characteristic of the uplink scheduling resource, and no corresponding physical communication characteristic is configured for the logical channel B, or
when any one of at least one physical communication characteristic corresponding to the logical channel A is consistent with the physical communication characteristic of the uplink scheduling resource, and each of at least one physical communication characteristic corresponding to the logical channel B is inconsistent with the physical communication characteristic of the uplink scheduling resource,
determining, by the terminal device, that the data transmission priority of the logical channel A is the first data transmission priority and that the data transmission priority of the logical channel B is the second data transmission priority.

That no corresponding physical communication characteristic is configured for the logical channel B means that the correspondence does not include a correspondence between the logical channel B and a physical communication characteristic.

The first data transmission priority is higher than the second data transmission priority, to be specific, the data on the logical channel A is preferentially loaded into the MAC PDU, and the logical channel A and the logical channel B are any two of the N logical channels. The logical channel A may correspond to one or more physical communication characteristics, and the logical channel B may correspond to one or more physical communication characteristics.

For example, it is assumed that the logical channel A and the logical channel B are any two of the N logical channels. When physical communication characteristics corresponding to the logical channel A include a Numerology 1 and a Numerology 2, no corresponding physical communication characteristic is configured for the logical channel B, and the physical communication characteristic of the uplink scheduling resource is a Numerology 2, the Numerology 2 in the physical communication characteristics (the Numerology 1 and the Numerology 2) corresponding to the logical channel A is consistent with the physical communication characteristic, namely, the Numerology 2, of the uplink scheduling resource. Therefore, the terminal device determines that the data transmission priority of the logical channel A is the first data transmission priority and that the data transmission priority of the logical channel B is the second data transmission priority. The first data transmission priority is higher than the second data transmission priority, to be specific, the data on the logical channel A is preferentially loaded into the MAC PDU.

When physical communication characteristics corresponding to the logical channel A include a Numerology 1 and a Numerology 2, physical communication characteristics corresponding to the logical channel B include a Numerology 3 and a Numerology 4, and the physical communication characteristic of the uplink scheduling resource is a Numerology 1, the Numerology 1 in the physical communication characteristics (the Numerology 1 and the Numerology 2) corresponding to the logical channel A is consistent with the physical communication characteristic, namely, the Numerology 1, of the uplink scheduling resource, and both the physical communication characteristics (the Numerology 3 and the Numerology 4) corresponding to the logical channel B are inconsistent with the physical communication characteristic, namely, the Numerology 1, of the uplink scheduling resource. Therefore, the terminal device determines that the data transmission priority of the logical channel A is the first data transmission priority and that the data transmission priority of the logical channel B is the second data transmission priority. The first data transmission priority is higher than the second data transmission priority, to be specific, the data on the logical channel A is preferentially loaded into the MAC PDU.

Specifically, that the terminal device determines a data transmission priority corresponding to each of N logical channels specifically includes:
when any one of at least one physical communication characteristic corresponding to the logical channel A and any one of at least one physical communication characteristic corresponding to the logical channel B are consistent with the physical communication characteristic of the uplink scheduling resource, or
when each of at least one physical communication characteristic corresponding to the logical channel A and each of at least one physical communication characteristic corresponding to the logical channel B are inconsistent with the physical communication characteristic of the uplink scheduling resource, or
when no corresponding physical communication characteristic is configured for the logical channel A or the logical channel B,
determining, by the terminal device, a second priority of the logical channel A and a second priority of the logical channel B; and
when the second priority of the logical channel A is higher than the second priority of the logical channel B, determining, by the terminal device, that the data transmission priority of the logical channel A is the first data transmission priority and that the data transmission priority of the logical channel B is the second data transmission priority.

The first data transmission priority is higher than the second data transmission priority, to be specific, the data on the logical channel A is preferentially loaded into the MAC PDU, the second priority of the logical channel A is configured by the base station by using the RRC signaling or the SIB or is preconfigured on the terminal device side, and the second priority of the logical channel B is configured by the base station by using the RRC signaling or the SIB or is preconfigured on the terminal device side.

The logical channel A may correspond to one or more physical communication characteristics, and the logical channel B may correspond to one or more physical communication characteristics.

The second priority is used to further determine the data transmission priority of the logical channel, and the second priority is the same as or different from the first priority.

That no corresponding physical communication characteristic is configured for the logical channel A means that the correspondence does not include a correspondence between the logical channel A and a physical communication characteristic.

That no corresponding physical communication characteristic is configured for the logical channel B means that the correspondence does not include a correspondence between the logical channel B and a physical communication characteristic.

For example, it is assumed that the logical channel A and the logical channel B are any two of the N logical channels. When physical communication characteristics corresponding to the logical channel A include a Numerology 1 and a Numerology 2, physical communication characteristics corresponding to the logical channel B include a Numerology 2 and a Numerology 3, and the physical communication characteristic of the uplink scheduling resource is a Numerology 2, or
when physical communication characteristics corresponding to the logical channel A include a Numerology 1 and a Numerology 2, physical communication characteristics corresponding to the logical channel B include a Numerology 2 and a Numerology 3, and the physical communication characteristic of the uplink scheduling resource is a Numerology 5, or
when no corresponding physical communication characteristic is configured for the logical channel A or the logical channel B, the terminal device cannot determine the data transmission priorities of the logical channels based on the physical communication characteristics corresponding to the logical channels and the physical communication characteristic of the uplink scheduling resource. In this case, the second priority of the logical channel needs to be introduced.

The terminal device determines the second priority of the logical channel A and the second priority of the logical channel B. When the second priority of the logical channel A is higher than the second priority of the logical channel B, the terminal device determines that the data transmission priority of the logical channel A is the first data transmission priority and that the data transmission priority of the logical channel B is the second data transmission priority. When the second priority of the logical channel A is lower than the second priority of the logical channel B, the terminal device determines that the data transmission priority of the logical channel B is the first data transmission priority and that the data transmission priority of the logical channel A is the second data transmission priority. The first data transmission priority is higher than the second data transmission priority.

Optionally, the second priority of the logical channel A is configured for the logical channel by sending the RRC signaling or the SIB by the base station to the terminal device, and the second priority of the logical channel B is configured for the logical channel A and the logical channel B by sending the RRC signaling or the SIB by the base station to the terminal device. Optionally, the second priority of the logical channel A is preconfigured on the terminal device side, and the second priority of the logical channel B is preconfigured on the terminal device side.

Optionally, the second priority may be the same as or different from the first priority.

Specifically, physical communication characteristics corresponding to the logical channel A are classified into a default physical communication characteristic and/or an optional physical communication characteristic, physical communication characteristics corresponding to the logical channel B are classified into a default physical communication characteristic and/or an optional physical communication characteristic, and that the terminal device determines a data transmission priority corresponding to each of N logical channels specifically includes:
when any one of at least one default physical communication characteristic corresponding to the logical channel A and any one of at least one default physical communication characteristic corresponding to the logical channel B are consistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and each of at least one optional physical communication characteristic corresponding to the logical channel A and each of at least one optional physical communication characteristic corresponding to the logical channel B are inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and any one of at least one optional physical communication characteristic corresponding to the logical channel A and any one of at least one optional physical communication characteristic corresponding to the logical channel B are consistent with the physical communication characteristic of the uplink scheduling resource,
determining, by the terminal device, a second priority of the logical channel A and a second priority of the logical channel B; and
when the second priority of the logical channel A is higher than the second priority of the logical channel B, determining, by the terminal device, that the data transmission priority of the logical channel A is the first data transmission priority and that the data transmission priority of the logical channel B is the second data transmission priority, to be specific, preferentially loading the data on the logical channel A into the MAC PDU.

The default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, and the logical channel A and the logical channel B are any two of the N logical channels.

That any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic.

That any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic.

The logical channel A or B may correspond to one or more default physical communication characteristics.

The logical channel A or B may correspond to one or more optional physical communication characteristics.

The second priority of the logical channel A is configured by the base station by using the RRC signaling or the SIB or is preconfigured on the terminal device side, and the second priority of the logical channel B is configured by the base station by using the RRC signaling or the SIB or is preconfigured on the terminal device side.

It should be noted that, that the default physical communication characteristic is used to indicate a physical layer parameter that is most preferentially used when data on a corresponding logical channel is sent specifically means that the terminal device preferentially selects the physical layer parameter indicated by the default physical communication characteristic to transmit the data of the terminal on the logical channel. That the optional physical communication characteristic is used to indicate a physical layer parameter that is second-most preferentially used when the data on the corresponding logical channel is sent specifically means that the terminal device secondarily selects the physical layer parameter indicated by the optional physical communication characteristic to transmit the data of the terminal on the logical channel. It can be understood that during data transmission, the terminal device first selects the default physical communication characteristic, and then selects the optional physical communication characteristic when the default physical communication characteristic does not exist or does not satisfy a condition.

The correspondence may be explicit or implicit. This is not limited in the present invention. Optionally, the correspondence may be shown in Table 7. Table 7 is a table of a correspondence between a logical channel identifier and each of a default physical communication characteristic and an optional physical communication characteristic.

**Table 7**

| | Default physical communication characteristic | Optional physical communication characteristic |
|---|---|---|
| Identifier of a logical channel 1 | Physical communication characteristic identifier 1 | Physical communication characteristic identifier 2 |
| Identifier of a logical | Physical communication | |
| channel 2 | characteristic identifier 3 | |

Specifically, the terminal device determines, based on the correspondence between the logical channel identifier and the physical communication characteristic identifier, a physical communication characteristic included in a default physical communication characteristic corresponding to a logical channel and a physical communication characteristic included in an optional physical communication characteristic corresponding to the logical channel. The logical channel identifier is used to indicate a corresponding logical channel, and the physical communication characteristic identifier is used to indicate a corresponding physical communication characteristic.

Optionally, the correspondence may be shown in Table 8. Table 8 is a table of a correspondence between a logical channel identifier and each of a default physical communication characteristic and an optional physical communication characteristic.

**Table 8**

| | Default physical communication characteristic | Optional physical communication characteristic |
|---|---|---|
| Identifier of a logical channel 1 | Physical communication characteristic 1 | Physical communication characteristic 2 |
| Identifier of a logical channel 2 | Physical communication characteristic 3 | |

Specifically, the terminal device determines, based on the correspondence between the logical channel identifier and the physical communication characteristic identifier, a physical communication characteristic included in a default physical communication characteristic corresponding to a logical channel and a physical communication characteristic included in an optional physical communication characteristic corresponding to the logical channel. The logical channel identifier is used to indicate a corresponding logical channel.

Optionally, the correspondence may be shown in Table 9. Table 9 is a table of a correspondence between a logical channel and each of a default physical communication characteristic and an optional physical communication characteristic.

**Table 9**

| | Default physical communication characteristic | Optional physical communication characteristic |
|---|---|---|
| Logical channel 1 | Physical communication characteristic 1 | Physical communication characteristic 2 |
| Logical channel 2 | Physical communication characteristic 3 | |

Specifically, the terminal device determines, based on the correspondence between the logical channel and the physical communication characteristic, a physical communication characteristic included in a default physical communication characteristic corresponding to a logical channel and a physical communication characteristic included in an optional physical communication characteristic corresponding to the logical channel.

Optionally, the correspondence may be shown in Table 10. Table 10 is a table of a correspondence between a logical channel and each of a default physical communication characteristic and an optional physical communication characteristic.

**Table 10**

| | Default physical communication characteristic | Optional physical communication characteristic |
|---|---|---|
| Logical channel 1 | Physical communication characteristic identifier 1 | Physical communication characteristic identifier 2 |
| Logical channel 2 | Physical communication characteristic identifier 3 | |

Specifically, the terminal device determines, based on the correspondence between the logical channel and the physical communication characteristic identifier, a physical communication characteristic included in a default physical communication characteristic corresponding to a logical channel and a physical communication characteristic included in an optional physical communication characteristic corresponding to the logical channel. The physical communication characteristic identifier is used to indicate a corresponding physical communication characteristic.

Optionally, the correspondence may be shown in Table 11. Table 11 is a table of orders of default physical communication characteristics and optional physical communication characteristics.

**Table 11**

| Default physical communication characteristic | Optional physical communication characteristic |
|---|---|
| Physical communication characteristic 1 | |
| | Physical communication characteristic 2 |
| Physical communication characteristic 3 | Physical communication characteristic 3 |

The physical communication characteristics in Table 11 are sequentially sorted in an order of logical channel identifiers, and each row corresponds to one logical channel. The physical communication characteristics may be sorted in ascending order of the logical channel identifiers or in descending order of the logical channel identifiers.

Optionally, the correspondence may be shown in Table 12. Table 12 is a table of orders of default physical communication characteristics and optional physical communication characteristics.

**Table 12**

| Default physical communication characteristic | Optional physical communication characteristic |
|---|---|
| Physical communication characteristic identifier 1 | |
| | Physical communication characteristic identifier 2 |
| Physical communication characteristic identifier 3 | Physical communication characteristic identifier 3 |

The physical communication characteristic identifiers in Table 12 are sequentially sorted in an order of logical channel identifiers, and each row corresponds to one logical channel. The physical communication characteristic identifiers may be sorted in ascending order of the logical channel identifiers or in descending order of the logical channel identifiers.

Optionally, the base station adds a default physical communication characteristic and/or an optional physical communication characteristic to a message for configuring a logical channel. Optionally, the base station adds a default physical communication characteristic identifier and/or an optional physical communication characteristic identifier to a message for configuring a logical channel.

The logical channel identifier is used to indicate a corresponding logical channel, and the physical communication characteristic identifier is used to indicate a corresponding physical communication characteristic.

Optionally, the physical communication characteristic identifier may be used to obtain the corresponding physical communication characteristic through calculation. For example, it is assumed that the physical communication characteristic includes only a subcarrier spacing, and the subcarrier spacing may be obtained through calculation according to a formula 15 kHz × 2*ⁿ*, where n may be a nonnegative integer or a negative integer. In this case, the physical communication characteristic identifier may be n.

Based on any one or a combination of the optional manners shown in Table 7 to Table 12, the terminal device may obtain a default physical communication characteristic and/or an optional physical communication characteristic corresponding to a logical channel. Another manner of obtaining the correspondence between the logical channel and the default physical communication characteristic and/or the correspondence between the logical channel and the optional physical communication characteristic may alternatively be used in the present invention.

For example, it is assumed that the logical channel A and the logical channel B are any two of the N logical channels. The physical communication characteristics corresponding to the logical channel A are classified into the default physical communication characteristic and/or the optional physical communication characteristic, and the physical communication characteristics corresponding to the logical channel B are classified into the default physical communication characteristic and/or the optional physical communication characteristic.

When the default physical communication characteristics corresponding to the logical channel A include a Numerology 1 and a Numerology 2, the default physical communication characteristics corresponding to the logical channel B include a Numerology 2 and a Numerology 3, and the physical communication characteristic of the uplink scheduling resource is a Numerology 2, or
when the default physical communication characteristics corresponding to the logical channel A include a Numerology 1 and a Numerology 2, the optional physical communication characteristics corresponding to the logical channel A include a Numerology 3 and a Numerology 4, the optional physical communication characteristics corresponding to the logical channel B include a Numerology 3 and a Numerology 4, the default physical communication characteristics corresponding to the logical channel B include a Numerology 5 and a Numerology 6, and the physical communication characteristic of the uplink scheduling resource is a Numerology 7, or
when the default physical communication characteristics corresponding to the logical channel A include a Numerology 1 and a Numerology 2, the optional physical communication characteristics corresponding to the logical channel A include a Numerology 3 and a Numerology 4, the optional physical communication characteristics corresponding to the logical channel B include a Numerology 1 and a Numerology 3, the default physical communication characteristics corresponding to the logical channel B include a Numerology 4 and a Numerology 5, and the physical communication characteristic of the uplink scheduling resource is a Numerology 3, or
when no default physical communication characteristic is configured for the logical channel A, the optional physical communication characteristics corresponding to the logical channel A include a Numerology 3 and a Numerology 4, the optional physical communication characteristics corresponding to the logical channel B include a Numerology 2 and a Numerology 3, the default physical communication characteristics corresponding to the logical channel B include a Numerology 4 and a Numerology 5, and the physical communication characteristic of the uplink scheduling resource is a Numerology 3, which may be understood that each of the default physical communication characteristics corresponding to the logical channel A and the logical channel B is inconsistent with the physical communication characteristic of the uplink scheduling resource, and any one of the optional physical communication characteristics corresponding to the logical channel A and any one of the optional physical communication characteristics corresponding to the logical channel B are consistent with the physical communication characteristic of the uplink scheduling resource, or
when no default physical communication characteristic is configured for the logical channel A, the optional physical communication characteristics corresponding to the logical channel A include a Numerology 3 and a Numerology 4, no default physical communication characteristic is configured for the logical channel B, the optional physical communication characteristics corresponding to the logical channel B include a Numerology 3 and a Numerology 5, and the physical communication characteristic of the uplink scheduling resource is a Numerology 3, or
when no default physical communication characteristic and no optional physical communication characteristic are configured for the logical channel A or the logical channel B, or
because the default physical communication characteristic corresponding to the logical channel A and the default physical communication characteristic corresponding to the logical channel B are consistent with the physical communication characteristic of the uplink scheduling resource, or
when any one of the at least one default physical communication characteristic corresponding to the logical channel A and any one of the at least one default physical communication characteristic corresponding to the logical channel B are inconsistent with the physical communication characteristic of the uplink scheduling resource, and any one of the at least one optional physical communication characteristic corresponding to the logical channel A and any one of the at least one optional physical communication characteristic corresponding to the logical channel B are inconsistent with the physical communication characteristic of the uplink scheduling resource, or
when any one of the at least one default physical communication characteristic corresponding to the logical channel A and any one of the at least one default physical communication characteristic corresponding to the logical channel B are inconsistent with the physical communication characteristic of the uplink scheduling resource, and any one of the at least one optional physical communication characteristic corresponding to the logical channel A and any one of the at least one optional physical communication characteristic corresponding to the logical channel B are consistent with the physical communication characteristic of the uplink scheduling resource; where
the default physical communication characteristic is used to indicate the physical layer parameter that is most preferentially used when the data on the corresponding logical channel is sent, the optional physical communication characteristic is used to indicate the physical layer parameter that is second-most preferentially used when the data on the corresponding logical channel is sent, and the logical channel A and the logical channel B are any two of the N logical channels;
that any one of the at least one default physical communication characteristic corresponding to the logical channel A and/or any one of the at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include the correspondence between the logical channel A and the default physical communication characteristic and/or the correspondence between the logical channel A and the optional physical communication characteristic;
that any one of the at least one default physical communication characteristic corresponding to the logical channel B and/or any one of the at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include the correspondence between the logical channel A and the default physical communication characteristic and/or the correspondence between the logical channel A and the optional physical communication characteristic;
the logical channel A or B may correspond to the one or more default physical communication characteristics; and
the logical channel A or B may correspond to the one or more optional physical communication characteristics,
the terminal device cannot determine the data transmission priorities of the logical channel A and the logical channel B based on the physical communication characteristic corresponding to the logical channel A, the physical communication characteristic corresponding to the logical channel B, and the physical communication characteristic of the uplink scheduling resource. In this case, the second priority of the logical channel needs to be introduced. The terminal device determines the data transmission priority of the logical channel based on the second priority of the logical channel, and details are as follows:
   The terminal device determines the second priority of the logical channel A and the second priority of the logical channel B; and
when the second priority of the logical channel A is higher than the second priority of the logical channel B, the terminal device determines that the data transmission priority of the logical channel A is the first data transmission priority and that the data transmission priority of the logical channel B is the second data transmission priority; otherwise, the terminal device determines that the data transmission priority of the logical channel B is the first data transmission priority and that the data transmission priority of the logical channel A is the second data transmission priority.

The first data transmission priority is higher than the second data transmission priority.

Specifically, that the terminal device determines a data transmission priority corresponding to each of N logical channels specifically includes:
when any one of at least one default physical communication characteristic corresponding to the logical channel A is consistent with the physical communication characteristic of the uplink scheduling resource, and each of at least one default physical communication characteristic corresponding to the logical channel B is inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, any one of at least one optional physical communication characteristic corresponding to the logical channel A is consistent with the physical communication characteristic of the uplink scheduling resource, and each of at least one optional physical communication characteristic corresponding to the logical channel B is inconsistent with the physical communication characteristic of the uplink scheduling resource,
determining, by the terminal device, that the data transmission priority of the logical channel A is the first data transmission priority and that the data transmission priority of the logical channel B is the second data transmission priority. The first data transmission priority is higher than the second data transmission priority, to be specific, the data on the logical channel A is preferentially loaded into the MAC PDU.

The default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, and the logical channel A and the logical channel B are any two of the N logical channels.

That any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic.

That any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic.

The logical channel A or B may correspond to one or more default physical communication characteristics.

The logical channel A or B may correspond to one or more optional physical communication characteristics.

For example, it is assumed that the logical channel A and the logical channel B are any two of the N logical channels. Physical communication characteristics corresponding to the logical channel A are classified into the default physical communication characteristic and/or the optional physical communication characteristic, and physical communication characteristics corresponding to the logical channel B are classified into the default physical communication characteristic and/or the optional physical communication characteristic.

When the default physical communication characteristics corresponding to the logical channel A include a Numerology 1 and a Numerology 2, the default physical communication characteristics corresponding to the logical channel B include a Numerology 2 and a Numerology 3, and the physical communication characteristic of the uplink scheduling resource is a Numerology 1, the Numerology 1 included in the default physical communication characteristics corresponding to the logical channel A is consistent with the physical communication characteristic (the Numerology 1) of the uplink scheduling resource, and the default physical communication characteristics (the Numerology 2 and the Numerology 3) corresponding to the logical channel B are inconsistent with the physical communication characteristic (the Numerology 1) of the uplink scheduling resource. Therefore, the terminal device determines that the data transmission priority of the logical channel A is the first data transmission priority and that the data transmission priority of the logical channel B is the second data transmission priority.

When the default physical communication characteristics corresponding to the logical channel A include a Numerology 1 and a Numerology 2, the optional physical communication characteristics corresponding to the logical channel A include a Numerology 3 and a Numerology 4, the optional physical communication characteristics corresponding to the logical channel B include a Numerology 1 and a Numerology 2, the default physical communication characteristics corresponding to the logical channel B include a Numerology 3 and a Numerology 5, and the physical communication characteristic of the uplink scheduling resource is a Numerology 4, none of the default physical communication characteristics (the Numerology 1 and the Numerology 2) corresponding to the logical channel A, the default physical communication characteristics (the Numerology 3 and the Numerology 5) corresponding to the logical channel B, and the optional physical communication characteristics (the Numerology 1 and the Numerology 2) corresponding to the logical channel B is inconsistent with the physical communication characteristic (the Numerology 4) of the uplink scheduling resource, and the Numerology 4 in the optional physical communication characteristics (the Numerology 3 and the Numerology 4) corresponding to the logical channel A is consistent with the physical communication characteristic (the Numerology 4) of the uplink scheduling resource. Therefore, the terminal device determines that the data transmission priority of the logical channel A is the first data transmission priority and that the data transmission priority of the logical channel B is the second data transmission priority.

When the default physical communication characteristics corresponding to the logical channel A include a Numerology 1 and a Numerology 2, no corresponding default physical communication characteristic and no corresponding optional physical communication characteristic are configured for the logical channel B, and the physical communication characteristic of the uplink scheduling resource is a Numerology 2, the Numerology 2 in the default physical communication characteristics (the Numerology 1 and the Numerology 2) corresponding to the logical channel A is consistent with the physical communication characteristic, namely, the Numerology 2, of the uplink scheduling resource. This may be understood as that the default physical communication characteristics corresponding to the logical channel A are consistent with the physical communication characteristic of the uplink scheduling resource, and the default physical communication characteristics corresponding to the logical channel B are inconsistent with the physical communication characteristic of the uplink scheduling resource. Therefore, the terminal device determines that the data transmission priority of the logical channel A is the first data transmission priority and that the data transmission priority of the logical channel B is the second data transmission priority.

When the default physical communication characteristics corresponding to the logical channel A include a Numerology 1 and a Numerology 2, the optional physical communication characteristics corresponding to the logical channel A include a Numerology 3 and a Numerology 4, no corresponding default physical communication characteristic and no corresponding optional physical communication characteristic are configured for the logical channel B, and the physical communication characteristic of the uplink scheduling resource is a Numerology 3, the default physical communication characteristics (the Numerology 1 and the Numerology 2) corresponding to the logical channel A are inconsistent with the physical communication characteristic, namely, the Numerology 3, of the uplink scheduling resource, and the Numerology 3 in the optional physical communication characteristics (the Numerology 3 and the Numerology 4) corresponding to the logical channel A is consistent with the physical communication characteristic, namely, the Numerology 3, of the uplink scheduling resource. This may be understood as that each of the default physical communication characteristics corresponding to the logical channel A and the logical channel B is inconsistent with the physical communication characteristic of the uplink scheduling resource, the optional physical communication characteristics corresponding to the logical channel A are consistent with the physical communication characteristic of the uplink scheduling resource, and the optional physical communication characteristics corresponding to the logical channel B are inconsistent with the physical communication characteristic of the uplink scheduling resource. Therefore, the terminal device determines that the data transmission priority of the logical channel A is the first data transmission priority and that the data transmission priority of the logical channel B is the second data transmission priority.

When no corresponding default physical communication characteristic is configured for the logical channel A, the optional physical communication characteristics corresponding to the logical channel A include a Numerology 3 and a Numerology 4, no corresponding optional physical communication characteristic is configured for the logical channel B, the default physical communication characteristic corresponding to the logical channel B is a Numerology 5, and the physical communication characteristic of the uplink scheduling resource is a Numerology 3, that no corresponding default physical communication characteristic is configured for the logical channel A may be understood as that the default physical communication characteristic corresponding to the logical channel A is inconsistent with the physical communication characteristic of the uplink scheduling resource, the default physical communication characteristic (the Numerology 5) corresponding to the logical channel B is inconsistent with the physical communication characteristic, namely, the Numerology 3, of the uplink scheduling resource, the Numerology 3 in the optional physical communication characteristics (the Numerology 3 and the Numerology 4) corresponding to the logical channel A is consistent with the physical communication characteristic, namely, the Numerology 3, of the uplink scheduling resource, and that no corresponding optional physical communication characteristic is configured for the logical channel B may be understood as that the optional physical communication characteristic corresponding to the logical channel B is inconsistent with the physical communication characteristic of the uplink scheduling resource. Therefore, the terminal device determines that the data transmission priority of the logical channel A is the first data transmission priority and that the data transmission priority of the logical channel B is the second data transmission priority.

Optionally, the terminal device may determine, based on a parameter included in a physical communication characteristic corresponding to each of the N logical channels, the data transmission priority corresponding to the logical channel. The parameter includes at least one of a subcarrier spacing, a CP length, a quantity of symbols, an RB location, slot duration, and a frame format.

For example, when a quantity of symbols in the physical communication characteristic corresponding to the logical channel A is less than a quantity of symbols in the physical communication characteristic corresponding to the logical channel B, the terminal device determines that the data transmission priority of the logical channel A is the first data transmission priority and that the data transmission priority of the logical channel B is the second data transmission priority.

It should be noted that the first data transmission priority is higher than the second data transmission priority, to be specific, the data on the logical channel A is preferentially loaded into the MAC PDU.

Optionally, when there is only one logical channel, the logical channel has a highest data transmission priority, and the data transmission priority of the logical channel does not need to be determined.

S203. The terminal device loads data on M logical channels in the N logical channels into the MAC PDU based on the data transmission priority corresponding to each of the N logical channels, where M is an integer less than or equal to N.

It should be noted that, that the terminal device sends data on a logical channel to the base station specifically means that the terminal device loads the data on the logical channel into the MAC PDU, and then sends the MAC PDU to the base station by using the uplink scheduling resource. A size of the uplink scheduling resource obtained by the terminal device is fixed. Therefore, when loading data into the MAC PDU, the terminal device needs to consider the size of the uplink scheduling resource.

For example, both the data on the logical channel A and the data on the logical channel B need to be sent to the base station, the data transmission priority of the logical channel A is higher than the data transmission priority of the logical channel B, and the size of the uplink scheduling resource can satisfy only a requirement of loading the data on the logical channel A. In this case, the terminal device loads only the data on the logical channel A with a higher data transmission priority into the MAC PDU.

If the uplink scheduling resource has a relatively large size, after the terminal device loads the data on the logical channel A with a higher data transmission priority into the MAC PDU, if in the uplink scheduling resource, there is still an idle resource for transmitting other data, the terminal device loads the data on the logical channel B into the MAC PDU.

Optionally, the terminal device loads the data on the M logical channels in the N logical channels into the MAC PDU based on the data transmission priority corresponding to each of the N logical channels. On a determined uplink scheduling resource, data is sequentially loaded based on data transmission priorities of logical channels, and a volume of data on each logical channel that is loaded into the MAC PDU and/or a time-frequency location of an occupied uplink scheduling resource are/is not limited in the present invention. For example, for a maximum volume of data on a single logical channel that is initially loaded into the MAC PDU, refer to an existing LTE mechanism (a token bucket mechanism).

Optionally, after all the N logical channels are served, to be specific, after data on all the N logical channels is loaded into the MAC PDU, when there is still a remaining uplink scheduling resource, data is sequentially loaded based on data transmission priorities of logical channels. A volume of data on each logical channel that is loaded into the MAC PDU and/or a time-frequency location of an occupied uplink scheduling resource are/is not limited in the present invention. For example, according to the LTE mechanism, data on a logical channel with a relatively high data transmission priority can be loaded as much as possible without being restricted by a maximum volume of data initially loaded.

Optionally, the correspondence further includes a probability P₁ corresponding to the optional physical communication characteristic corresponding to the logical channel A, and the method further includes:
when the physical communication characteristic of the uplink scheduling resource is consistent with the optional physical communication characteristic corresponding to the logical channel A, loading, by the terminal device, the data on the logical channel A into the MAC PDU based on the probability P₁.

Specifically, before the terminal device loads the data on the logical channel A into the MAC PDU, the terminal device generates a random probability P1. When the random probability P1 and the probability P₁ satisfy a first preset condition, the terminal device loads the data on the logical channel A into the MAC PDU.

Optionally, the first preset condition may be that the random probability P1 is greater than the probability Pi, the random probability P1 is less than the probability Pi, the random probability P1 is greater than or equal to the probability Pi, the random probability P1 is less than or equal to the probability Pi, the random probability P1 is equal to the probability Pi, or another condition. Optionally, the method further includes:
when the uplink scheduling resource does not satisfy a latency requirement of data on a logical channel C, skipping loading, by the terminal device, the data on the logical channel C into the MAC PDU.

The latency requirement of the data on the logical channel C may include but is not limited to one or more of an end-to-end latency requirement of a data packet on the logical channel, a unidirectional transmission latency requirement of the data packet on the logical channel, an air interface transmission latency requirement of the data packet on the logical channel, and a transmission time interval requirement of the data packet on the logical channel.

When the latency requirement of the data on the logical channel C includes a plurality of latency requirements, that the uplink scheduling resource does not satisfy a latency requirement of data on a logical channel C means that the uplink scheduling resource does not satisfy one of the plurality of latency requirements.

The logical channel C is any one of the N logical channels, and the latency requirement of the data on the logical channel C is configured by the base station by using the RRC signaling or the SIB or is preconfigured on the terminal device side.

The latency requirement of the data on the logical channel may include but is not limited to one or more of an end-to-end latency requirement of a data packet on the logical channel, a unidirectional transmission latency requirement of the data packet on the logical channel, an air interface transmission latency requirement of the data packet on the logical channel, and a TTI requirement of the data packet on the logical channel.

Specifically, before the terminal device loads the data on the logical channel C into the MAC PDU, the terminal device determines whether the uplink scheduling resource satisfies the latency requirement of the data on the logical channel. When the uplink scheduling resource satisfies the latency requirement of the data on the logical channel, the terminal device loads the data on the logical channel C into the MAC PDU. When the uplink scheduling resource does not satisfy the latency requirement of the data on the logical channel, the terminal device skips loading the data on the logical channel C into the MAC PDU.

Optionally, the latency requirement of the data on the logical channel C is configured for the logical channel C by sending the RRC signaling or the SIB by the base station to the terminal device.

Optionally, the latency requirement of the data on the logical channel C is preconfigured on the terminal device side.

For example, it is assumed that the air interface transmission latency requirement, configured by the base station by using the RRC signaling, of the data on the logical channel C is 0.5 ms, to be specific, air interface transmission latencies of all data packets on the logical channel C need to be less than or equal to 0.5 ms. After receiving the uplink scheduling resource configuration information, the terminal device needs a time for performing receive/transmit transition and other processing. When determining that the uplink scheduling resource does not satisfy the air interface transmission latency requirement of 0.5 ms, the terminal device skips loading the data on the logical channel C into the MAC PDU.

Alternatively, because data on a logical channel with a higher data transmission priority needs to first occupy some resources in the uplink scheduling resource, in consideration of a time for performing receive/transmit transition and other processing and a time-frequency location of the uplink scheduling resource occupied by the data on the logical channel with the higher data transmission priority, it is difficult for a remaining uplink scheduling resource to satisfy the air interface transmission latency requirement of the data on the logical channel C. In this case, the terminal device skips loading the data on the logical channel C into the MAC PDU.

Alternatively, because a media access control control element (MAC CE) may also need to occupy some resources in the uplink scheduling resource, in consideration of one or more of a time for performing receive/transmit transition and other processing, a time-frequency location of the uplink scheduling resource occupied by data on a logical channel with a higher data transmission priority, a time-frequency location of the uplink scheduling resource occupied by the MAC CE, it is difficult for a remaining uplink scheduling resource to satisfy the air interface transmission latency requirement of the data on the logical channel C. In this case, the terminal device skips loading the data on the logical channel C into the MAC PDU.

Alternatively, it is assumed that the latency requirement configured by the base station is the end-to-end latency requirement. In consideration of a processing latency of the base station, a receive/transmit transition latency, a time-frequency location of the uplink scheduling resource, and the like, the terminal device determines that it is difficult for the uplink scheduling resource to satisfy the end-to-end latency requirement. In this case, the terminal device skips loading the data on the logical channel C into the MAC PDU.

Optionally, the correspondence further includes a probability P₂ corresponding to an optional physical communication characteristic corresponding to the logical channel D, and the method further includes:
when the optional physical communication characteristic corresponding to the logical channel D is consistent with the physical communication characteristic of the uplink scheduling resource, and the uplink scheduling resource satisfies a latency requirement of data on the logical channel D, loading, by the terminal device, the data on the logical channel D into the MAC PDU based on the probability P₂, where the logical channel D is any one of the N logical channels. Specifically, before the terminal device loads the data on the logical channel D into the MAC PDU, the terminal device generates a random probability P2. When determining whether the uplink scheduling resource satisfies the latency requirement of the data on the logical channel D, the terminal device determines whether the random probability P2 and the probability P₂ satisfy a second preset condition. When both the two conditions are satisfied, the terminal device loads the data on the logical channel D into the MAC PDU. When any one of the two conditions is not satisfied, the terminal device skips loading the data on the logical channel D into the MAC PDU. Optionally, the second preset condition may be that the random probability P2 is greater than the probability P₂, the random probability P2 is less than the probability P₂, the random probability P2 is greater than or equal to the probability P₂, the random probability P2 is less than or equal to the probability P₂, the random probability P2 is equal to the probability P₂, or another condition. S204. The terminal device sends the MAC PDU on the uplink scheduling resource by using the physical communication characteristic of the uplink scheduling resource.

Specifically, the terminal device sends, by using the uplink scheduling resource, the MAC PDU in a form indicated by a parameter included in the physical communication characteristic of the uplink scheduling resource

Optionally, the MAC PDU may further include a buffer status report (BSR) used to indicate a buffer data volume corresponding to a logical channel group. The buffer data volume refers to a sum of a packet data convergence protocol (PDCP) layer buffer data volume corresponding to the logical channel group and a radio link control (RLC) layer buffer data volume corresponding to the logical channel group.

Alternatively, the buffer data volume refers to a PDCP layer buffer data volume corresponding to the logical channel group.

Alternatively, the buffer data volume refers to an RLC layer buffer data volume corresponding to the logical channel group.

Alternatively, the buffer data volume refers to a sum of a PDCP layer buffer data volume, an RLC layer buffer data volume, and a new access sublayer buffer data volume that are corresponding to the logical channel group. The new access sublayer is located above a PDCP layer, and a main function of the new access sublayer is mapping a data flow onto a bearer, to be specific, mapping data flows with different QoS requirements onto different bearers or a same bearer. For details, refer to 3GPP TR 38.304.

The logical channel group may include at least one logical channel.

Optionally, the buffer status report may be carried in a MAC CE, and the MAC CE may be placed at a header location of the MAC PDU.

Optionally, the buffer status report is used to indicate a buffer data volume existing before the MAC PDU is generated, instead of a buffer data volume existing after the MAC PDU is generated.

It can be learned that in the solutions in this embodiment of the present invention, first, the terminal device receives the uplink scheduling resource configuration information sent by the base station, where the uplink scheduling resource configuration information includes the information used to indicate the uplink scheduling resource to be used by the terminal device and the information used to indicate the physical communication characteristic of the uplink scheduling resource; next, the terminal device determines the data transmission priority corresponding to each of the N logical channels; then, the terminal device loads the data on the M logical channels in the N logical channels into the MAC PDU based on the data transmission priority corresponding to each of the N logical channels, where M is an integer less than or equal to N; and finally, the terminal device sends the MAC PDU to the base station on the uplink scheduling resource by using the physical communication characteristic of the uplink scheduling resource.

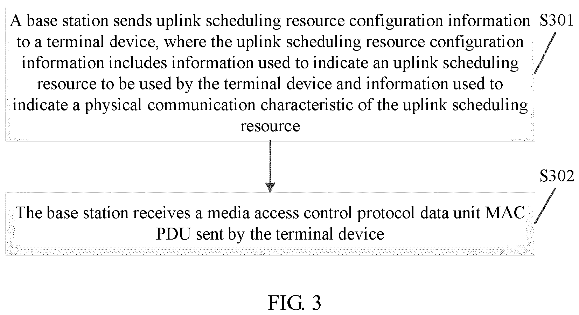

FIG. 3 is a schematic flowchart of another data packet transmission method according to an aspect. As shown in FIG. 3, the method includes the following steps:
S301. A base station sends uplink scheduling resource configuration information to a terminal device, where the uplink scheduling resource configuration information includes information used to indicate an uplink scheduling resource to be used by the terminal device and information used to indicate a physical communication characteristic of the uplink scheduling resource.
S302. The base station receives a MAC PDU sent by the terminal device.

The method further includes:
sending, by the base station, a correspondence to the terminal device.

The correspondence includes information used to indicate a correspondence between N1 logical channels in the N logical channels and a physical communication characteristic, the physical communication characteristic is used to indicate a physical layer parameter that is preferentially used when data on a corresponding logical channel is sent, and N1 is an integer less than or equal to N.

The method further includes:
sending, by the base station, RRC signaling to the terminal device. The RRC signaling is used to configure at least one of a first priority, a second priority, and a latency requirement for each of N logical channels.

The method further includes:
sending, by the base station, a SIB to the terminal device. The SIB is used to configure at least one of a first priority, a second priority, and a latency requirement for each of N logical channels.

Optionally, the at least one of the first priority, the second priority, and the latency requirement configured for each of the N logical channels may be preconfigured on the terminal device side.

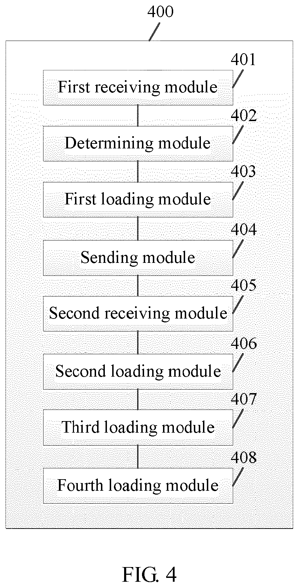

FIG. 4 is a schematic structural diagram of a terminal device according to an embodiment of the present invention. As shown in FIG. 4, the terminal device 400 includes a first receiving module 401, a determining module 402, a first loading module 403, and a sending module 404.

The first receiving module 401 is configured to receive uplink scheduling resource configuration information sent by a base station, where the uplink scheduling resource configuration information includes information used to indicate an uplink scheduling resource to be used by the terminal device 400 and information used to indicate a physical communication characteristic of the uplink scheduling resource.

The determining module 402 is configured to determine a data transmission priority corresponding to each of N logical channels.

Specifically, the determining module 402 is specifically configured to:
when a first priority of a logical channel A is higher than a first priority of a logical channel B, determine that a data transmission priority of the logical channel A is a first data transmission priority and that a data transmission priority of the logical channel B is a second data transmission priority, where
the first data transmission priority is higher than the second data transmission priority, to be specific, data on the logical channel A is preferentially loaded into a MAC PDU, and the logical channel A and the logical channel B are any two of the N logical channels; and
the first priority of the logical channel A is configured by the base station by using radio resource control RRC signaling or a system information block SIB or is preconfigured on the terminal device side, and the first priority of the logical channel B is configured by the base station by using the RRC signaling or the SIB or is preconfigured on the terminal device side.

Before the determining module 402 determines the data transmission priority corresponding to each of the N logical channels, the terminal device further includes:
a second receiving module 405, configured to receive a correspondence sent by the base station, where the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, N1 is an integer less than or equal to N, and the second receiving module may be the same as or different from the first receiving module.

Specifically, the determining module 402 is specifically configured to:
when any one of at least one physical communication characteristic corresponding to the logical channel A is consistent with the physical communication characteristic of the uplink scheduling resource, and no corresponding physical communication characteristic is configured for the logical channel B, or
when any one of at least one physical communication characteristic corresponding to the logical channel A is consistent with the physical communication characteristic of the uplink scheduling resource, and each of at least one physical communication characteristic corresponding to the logical channel B is inconsistent with the physical communication characteristic of the uplink scheduling resource,
determine that the data transmission priority of the logical channel A is the first data transmission priority and that the data transmission priority of the logical channel B is the second data transmission priority, where
the first data transmission priority is higher than the second data transmission priority, to be specific, the data on the logical channel A is preferentially loaded into the MAC PDU, and the logical channel A and the logical channel B are any two of the N logical channels. Specifically, the determining module 402 is specifically configured to:
when any one of at least one physical communication characteristic corresponding to the logical channel A and any one of at least one physical communication characteristic corresponding to the logical channel B are consistent with the physical communication characteristic of the uplink scheduling resource, or
when each of at least one physical communication characteristic corresponding to the logical channel A and each of at least one physical communication characteristic corresponding to the logical channel B are inconsistent with the physical communication characteristic of the uplink scheduling resource, or
when no corresponding physical communication characteristic is configured for the logical channel A or the logical channel B,
determine a second priority of the logical channel A and a second priority of the logical channel B; and
when the second priority of the logical channel A is higher than the second priority of the logical channel B, determine that the data transmission priority of the logical channel A is the first data transmission priority and that the data transmission priority of the logical channel B is the second data transmission priority, where
the first data transmission priority is higher than the second data transmission priority, to be specific, the data on the logical channel A is preferentially loaded into the MAC PDU, the second priority of the logical channel A is configured by the base station by using the RRC signaling or the SIB or is preconfigured on the terminal device side, the second priority of the logical channel B is configured by the base station by using the RRC signaling or the SIB or is preconfigured on the terminal device side, and the second priority is the same as or different from the first priority.

Specifically, physical communication characteristics corresponding to the logical channel A are classified into a default physical communication characteristic and/or an optional physical communication characteristic, physical communication characteristics corresponding to the logical channel B are classified into a default physical communication characteristic and/or an optional physical communication characteristic, and the determining module 402 is specifically configured to:
when any one of at least one default physical communication characteristic corresponding to the logical channel A and any one of at least one default physical communication characteristic corresponding to the logical channel B are consistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and each of at least one optional physical communication characteristic corresponding to the logical channel A and each of at least one optional physical communication characteristic corresponding to the logical channel B are inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, and any one of at least one optional physical communication characteristic corresponding to the logical channel A and any one of at least one optional physical communication characteristic corresponding to the logical channel B are consistent with the physical communication characteristic of the uplink scheduling resource,
determine a second priority of the logical channel A and a second priority of the logical channel B; and
when the second priority of the logical channel A is higher than the second priority of the logical channel B, determine that the data transmission priority of the logical channel A is the first data transmission priority and that the data transmission priority of the logical channel B is the second data transmission priority, to be specific, preferentially load the data on the logical channel A into the MAC PDU, where
the default physical communication characteristic is used to indicate a physical layer parameter that is most preferentially used when data on a corresponding logical channel is sent, the optional physical communication characteristic is used to indicate a physical layer parameter that is second-most preferentially used when the data on the corresponding logical channel is sent, and the logical channel A and the logical channel B are any two of the N logical channels; and
the second priority of the logical channel A is configured by the base station by using the RRC signaling or the SIB or is preconfigured on the terminal device side, and the second priority of the logical channel B is configured by the base station by using the RRC signaling or the SIB or is preconfigured on the terminal device side.

That any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic.

That any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic.

The logical channel A or B may correspond to one or more default physical communication characteristics.

The logical channel A or B may correspond to one or more optional physical communication characteristics.

Specifically, the determining module 402 is specifically configured to:
when any one of at least one default physical communication characteristic corresponding to the logical channel A is consistent with the physical communication characteristic of the uplink scheduling resource, and each of at least one default physical communication characteristic corresponding to the logical channel B is inconsistent with the physical communication characteristic of the uplink scheduling resource, or
when each of at least one default physical communication characteristic corresponding to the logical channel A and each of at least one default physical communication characteristic corresponding to the logical channel B are inconsistent with the physical communication characteristic of the uplink scheduling resource, any one of at least one optional physical communication characteristic corresponding to the logical channel A is consistent with the physical communication characteristic of the uplink scheduling resource, and each of at least one optional physical communication characteristic corresponding to the logical channel B is inconsistent with the physical communication characteristic of the uplink scheduling resource,
determine that the data transmission priority of the logical channel A is the first data transmission priority and that the data transmission priority of the logical channel B is the second data transmission priority, where the first data transmission priority is higher than the second data transmission priority, to be specific, the data on the logical channel A is preferentially loaded into the MAC PDU.

That any one of at least one default physical communication characteristic corresponding to the logical channel A and/or any one of at least one optional physical communication characteristic corresponding to the logical channel A are/is inconsistent with the physical communication characteristic of the uplink scheduling resource includes that no corresponding default physical communication characteristic and/or no corresponding optional physical communication characteristic are/is configured for the logical channel A, to be specific, the correspondence does not include a correspondence between the logical channel A and the default physical communication characteristic and/or a correspondence between the logical channel A and the optional physical communication characteristic.

That any one of at least one default physical communication characteristic corresponding to the logical channel B and/or any one of at least one optional physical communication characteristic corresponding to the logical channel B are/is inconsistent with the physical communication characteristic of the uplink scheduling resource includes that no corresponding default physical communication characteristic and/or no corresponding optional physical communication characteristic are/is configured for the logical channel B, to be specific, the correspondence does not include a correspondence between the logical channel A and the default physical communication characteristic and/or a correspondence between the logical channel A and the optional physical communication characteristic.

The logical channel A or B may correspond to one or more default physical communication characteristics.

The logical channel A or B may correspond to one or more optional physical communication characteristics.

The first loading module 403 is configured to load data on M logical channels in the N logical channels into the MAC PDU based on the data transmission priority corresponding to each of the N logical channels, where M is an integer less than or equal to N.

Optionally, the correspondence further includes a probability P₁ corresponding to the optional physical communication characteristic corresponding to the logical channel A, and the terminal device 400 further includes:
a second loading module 406, configured to: when the physical communication characteristic of the uplink scheduling resource is consistent with the optional physical communication characteristic corresponding to the logical channel A, load, by the terminal device, the data on the logical channel A into the MAC PDU based on the probability P₁, where the second loading module may be the same as or different from the first loading module. Optionally, the terminal device further includes:
a third loading module 407, configured to: when the uplink scheduling resource does not satisfy a latency requirement of data on a logical channel C, skip loading, by the terminal device, the data on the logical channel C into the MAC PDU, where
the logical channel C is any one of the N logical channels, the latency requirement of the data on the logical channel C is configured by the base station by using the RRC signaling or the SIB or is preconfigured on the terminal device side, the third loading module may be the same as or different from the first loading module, and the third loading module may be the same as or different from the second loading module.

Optionally, the correspondence further includes a probability P₂ corresponding to an optional physical communication characteristic corresponding to the logical channel D, and the terminal device 400 further includes:
a fourth loading module 408, configured to: when the optional physical communication characteristic corresponding to the logical channel D is consistent with the physical communication characteristic of the uplink scheduling resource, and the uplink scheduling resource satisfies a latency requirement of data on the logical channel D, load, by the terminal device, the data on the logical channel D into the MAC PDU based on the probability P₂, where the logical channel D is any one of the N logical channels, the fourth loading module may be the same as or different from the first loading module, the fourth loading module may be the same as or different from the second loading module, and the fourth loading module may be the same as or different from the third loading module.

The sending module 404 is configured to send the MAC PDU on the uplink scheduling resource by using the physical communication characteristic of the uplink scheduling resource.

It should be noted that the foregoing modules (the first receiving module 401, the determining module 402, the first loading module 403, the sending module 404, the second receiving module 405, the second loading module 406, the third loading module 407, and the fourth loading module 408) are configured to perform related steps in the foregoing method. For example, the first receiving module is configured to perform related content of step S201; the determining module is configured to perform related content of step S202; the first loading module, the second loading module, the third loading module, and the fourth loading module are configured to perform related content of step S203; and the sending module is configured to perform related content of step S204.

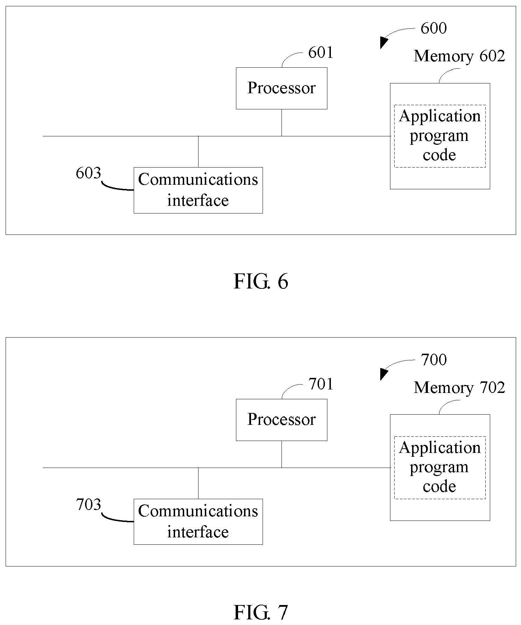

In this embodiment, the terminal device 400 is presented in a form of modules. The "module" herein may be an application-specific integrated circuit (ASIC), a processor that executes one or more software or firmware programs, a memory, an integrated logic circuit, and/or another device that can provide the foregoing functions. In addition, the first receiving module 401, the determining module 402, the first loading module 403, the sending module 404, the second receiving module 405, the second loading module 406, the third loading module 407, and the fourth loading module 408 may be implemented by a processor 601 of a terminal device shown in FIG. 6.

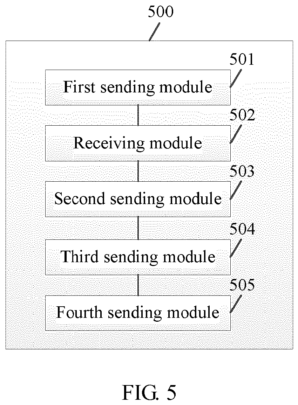

FIG. 5 is a schematic structural diagram of a base station according to an aspect. As shown in FIG. 5, the base station 500 includes a first sending module 501 and a receiving module 502.

The first sending module 501 is configured to send uplink scheduling resource configuration information to a terminal device, where the uplink scheduling resource configuration information includes information used to indicate an uplink scheduling resource to be used by the terminal device and information used to indicate a physical communication characteristic of the uplink scheduling resource.

The base station 500 further includes:
a second sending module 503, configured to send a correspondence to the terminal device, where the second sending module may be the same as or different from the first sending module; and
the correspondence includes information used to indicate a correspondence between N1 logical channels in the N logical channels and a physical communication characteristic, the physical communication characteristic is used to indicate a physical layer parameter that is preferentially used when data on a corresponding logical channel is sent, and N1 is an integer less than or equal to N.

Optionally, the base station 500 further includes:
a third sending module 504, configured to send RRC signaling to the terminal device, where the RRC signaling is used to configure at least one of a first priority, a second priority, and a latency requirement for each of N logical channels, the third sending module may be the same as or different from the first sending module, and the third sending module may be the same as or different from the second sending module.

Optionally, the base station 500 further includes:
a fourth sending module 505, configured to send a SIB to the terminal device, where the SIB is used to configure at least one of a first priority, a second priority, and a latency requirement for each of N logical channels, the fourth sending module may be the same as or different from the first sending module, the fourth sending module may be the same as or different from the second sending module, and the fourth sending module may be the same as or different from the third sending module.

The receiving module 502 is configured to receive a MAC PDU sent by the terminal device.

It should be noted that the foregoing modules (the first sending module 501, the receiving module 502, the second sending module 503, the third sending module 504, and the fourth sending module 505) are configured to perform related steps in the foregoing method. For example, the first sending module, the second sending module, the third sending module, and the fourth sending module are configured to perform related content of step S301; and the receiving module is configured to perform related content of step S302.

In this embodiment, the base station 500 is presented in a form of modules. The "module" herein may be an application-specific integrated circuit (ASIC), a processor that executes one or more software or firmware programs, a memory, an integrated logic circuit, and/or another device that can provide the foregoing functions. In addition, the first sending module 501, the receiving module 502, the second sending module 503, the third sending module 504, and the fourth sending module 505 may be implemented by a processor 701 of a base station shown in FIG. 7. As shown in FIG. 6, a terminal device 600 may be implemented by using a structure in FIG. 6. The terminal device 600 includes at least one processor 601, at least one memory 602, and at least one communications interface 603. The processor 601, the memory 602, and the communications interface 603 are connected and communicate with each other by using the communications bus.

The processor 601 may be a general-purpose central processing unit (CPU), a microprocessor, an application-specific integrated circuit (ASIC), or one or more integrated circuits configured to control program execution of the foregoing solution.

The communications interface 603 is configured to communicate with another device or a communications network such as Ethernet, a radio access network (RAN), or a wireless local area network (WLAN).

The memory 602 may be a read-only memory (ROM), another type of static storage device that can store static information and an instruction, a random access memory (RAM), or another type of dynamic storage device that can store information and an instruction, or may be an electrically erasable programmable read-only memory (EEPROM), a compact disc read-only memory (CD-ROM), other optical disk storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that can be accessed by a computer. However, no limitation is imposed thereto. The memory may exist independently, and is connected to the processor by using the bus. Alternatively, the memory may be integrated with the processor.

The memory 602 is configured to store application program code for performing the foregoing solution, and the processor 601 controls execution of the application program code. The processor 601 is configured to execute the application program code stored in the memory 602, to implement related content of steps S201 to S204 in the foregoing method embodiment.

As shown in FIG. 7, a base station 700 may be implemented by using a structure in FIG. 7. The base station 700 includes at least one processor 701, at least one memory 702, and at least one communications interface 703. The processor 701, the memory 702, and the communications interface 703 are connected and communicate with each other by using the communications bus. The processor 701 may be a general-purpose central processing unit (CPU), a microprocessor, an application-specific integrated circuit (ASIC), or one or more integrated circuits configured to control program execution of the foregoing solution.

The communications interface 703 is configured to communicate with another device or a communications network such as Ethernet, a radio access network (RAN), or a wireless local area network (WLAN).

The memory 702 may be a read-only memory (ROM), another type of static storage device that can store static information and an instruction, a random access memory (RAM), or another type of dynamic storage device that can store information and an instruction; or may be an electrically erasable programmable read-only memory (EEPROM), a compact disc read-only memory (CD-ROM), other optical disk storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that can be accessed by a computer. However, no limitation is imposed thereto. The memory may exist independently, and is connected to the processor by using the bus. Alternatively, the memory may be integrated with the processor.

The memory 702 is configured to store application program code for performing the foregoing solution, and the processor 701 controls execution of the application program code. The processor 701 is configured to execute the application program code stored in the memory 702, to implement related content of steps S301 and S302 in the foregoing method embodiment.

An embodiment of the present invention further provides a computer storage medium, configured to store a software instruction used by the foregoing terminal device, where the software instruction includes a program designed for performing the foregoing method embodiment. By executing the stored program, transmission of data on a logical channel with a high priority is ensured, and a waste of resources is avoided, thereby matching a resource with a service to the utmost.

An embodiment of the present invention further provides a computer storage medium, configured to store a software instruction used by the foregoing base station, where the software instruction includes a program designed for performing the foregoing method embodiment. By executing the stored program, transmission of data on a logical channel with a high priority is ensured, and a waste of resources is avoided, thereby matching a resource with a service to the utmost.

It should be noted that, for ease of description, the foregoing method embodiments are expressed as a series of actions. However, a person skilled in the art should appreciate that the present invention is not limited by the described action order, because according to the present invention, some steps may be performed in another order or performed simultaneously. In addition, a person skilled in the art should also appreciate that all the embodiments described in this specification are preferred embodiments, and the related actions and modules are not necessarily mandatory to the present invention.

In the foregoing embodiments, the descriptions of the embodiments have respective focuses. For a part that is not described in detail in an embodiment, refer to related description in another embodiment.

In the several embodiments provided in this application, it should be understood that the disclosed apparatus may be implemented in other manners. For example, the described apparatus embodiments are merely examples. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical or other forms.

The units described as separate parts may or may not be physically separate, and parts displayed as units may or may not be physical units, may be located in one position, or may be distributed on a plurality of network units. Some or all of the units may be selected depending on actual requirements, to achieve the objectives of the solutions in the embodiments.

In addition, function units in the embodiments of the present invention may be integrated into one processing unit, or each of the units may exist alone physically, or at least two units are integrated into one unit. The integrated unit may be implemented in a form of hardware, or may be implemented in a form of a software function unit.

When the integrated unit is implemented in a form of a software function unit and sold or used as an independent product, the integrated unit may be stored in a computer readable memory. Based on such an understanding, the technical solutions of the present invention essentially, or the part contributing to the prior art, or all or some of the technical solutions may be implemented in a form of a software product. The computer software product is stored in a memory and includes several instructions for instructing a computer device (which may be a personal computer, a server, a network device, or the like) to perform all or some of the steps of the methods described in the embodiments of the present invention. The foregoing memory includes any medium that can store program code, such as a USB flash drive, a read-only memory (ROM), a random access memory (RAM), a removable hard disk, a magnetic disk, or an optical disc.

A person of ordinary skill in the art can understand that all or some of the steps of the methods in the embodiments may be completed by a program instructing related hardware. The program may be stored in a computer readable memory. The memory may include a flash memory, a read-only memory (ROM), a random access memory (RAM), a magnetic disk, an optical disc, or the like.

The foregoing describes the embodiments of the present invention in detail. This specification describes the principle and implementations of the present invention by using specific examples.

## Claims

1. A data packet transmission method, comprising:
receiving (S201), by a terminal device (101, 400, 600), uplink scheduling resource configuration information sent by a base station (102, 500, 700), wherein the uplink scheduling resource configuration information comprises information used to indicate an uplink scheduling resource to be used by the terminal device (101, 400, 600) and information used to indicate a physical communication characteristic of the uplink scheduling resource;
determining (S202), by the terminal device (101, 400, 600), a data transmission priority corresponding to each of N logical channels;
loading (S203), by the terminal device (101, 400, 600), data on M logical channels in the N logical channels into a media access control protocol data unit, MAC PDU, based on the data transmission priority corresponding to each of the N logical channels, wherein M is an integer less than or equal to N; and
sending (S204), by the terminal device (101, 400, 600), the MAC PDU on the uplink scheduling resource by using the physical communication characteristic of the uplink scheduling resource,
wherein the determining (S202), by the terminal device (101, 400, 600), the data transmission priority corresponding to each of N logical channels comprises:
when any one of at least one physical communication characteristic corresponding to a logical channel A is consistent with the physical communication characteristic of the uplink scheduling resource, and no corresponding physical communication characteristic is configured for a logical channel B, or
when any one of at least one physical communication characteristic corresponding to the logical channel A is consistent with the physical communication characteristic of the uplink scheduling resource, and each of at least one physical communication characteristic corresponding to the logical channel B is inconsistent with the physical communication characteristic of the uplink scheduling resource,
determining, by the terminal device (101, 400, 600), that the data transmission priority of the logical channel A is the first data transmission priority and that the data transmission priority of the logical channel B is the second data transmission priority, wherein
the first data transmission priority is higher than the second data transmission priority, and wherein the data on the logical channel A is preferentially loaded into the MAC PDU, and the logical channel A and the logical channel B are any two of the N logical channels.

2. The method according to claim 1, wherein before the determining (S202), by the terminal device (101, 400, 600), the data transmission priority corresponding to each of the N logical channels, the method further comprises:
receiving, by the terminal device (101, 400, 600), a correspondence sent by the base station (102, 500, 700), wherein the correspondence comprises information used to indicate a correspondence between N1 logical channels in the N logical channels and a physical communication characteristic, the physical communication characteristic is used to indicate a physical layer parameter that is preferentially used when data on a corresponding logical channel is sent, and N1 is an integer less than or equal to N.

3. A terminal device (101, 400), comprising:
a receiving module (401, 405), configured to receive uplink scheduling resource configuration information sent by a base station (102, 500, 700), wherein the uplink scheduling resource configuration information comprises information used to indicate an uplink scheduling resource to be used by the terminal device (101, 400) and information used to indicate a physical communication characteristic of the uplink scheduling resource;
a determining module (402, 406), configured to determine a data transmission priority corresponding to each of N logical channels;
the determining module (402, 406), further configured to load data on M logical channels in the N logical channels into a media access control protocol data unit, MAC PDU, based on the data transmission priority corresponding to each of the N logical channels, wherein M is an integer less than or equal to N; and
a sending module (404), configured to send the MAC PDU on the uplink scheduling resource by using the physical communication characteristic of the uplink scheduling resource,
wherein the determining module (402, 406) is further configured to:
when any one of at least one physical communication characteristic corresponding to the logical channel A is consistent with the physical communication characteristic of the uplink scheduling resource, and no corresponding physical communication characteristic is configured for the logical channel B, or
when any one of at least one physical communication characteristic corresponding to the logical channel A is consistent with the physical communication characteristic of the uplink scheduling resource, and each of at least one physical communication characteristic corresponding to the logical channel B is inconsistent with the physical communication characteristic of the uplink scheduling resource,
determine that the data transmission priority of the logical channel A is the first data transmission priority and that the data transmission priority of the logical channel B is the second data transmission priority, wherein
the first data transmission priority is higher than the second data transmission priority, and wherein the data on the logical channel A is preferentially loaded into the MAC PDU, and the logical channel A and the logical channel B are any two of the N logical channels.

4. The terminal device (101, 400) according to claim 3, wherein before the determining module (402, 406) determines the data transmission priority corresponding to each of the N logical channels,
the receiving module (401, 405) is further configured to receive a correspondence sent by the base station (102, 500, 700), wherein the correspondence comprises information used to indicate a correspondence between N1 logical channels in the N logical channels and a physical communication characteristic, the physical communication characteristic is used to indicate a physical layer parameter that is preferentially used when data on a corresponding logical channel is sent, N1 is an integer less than or equal to N.

## Patentansprüche

1. Datenpaketübertragungsverfahren, umfassend:
Empfangen (S201), durch eine Endgerätevorrichtung (101, 400, 600), von Konfigurationsinformationen einer Uplink-Planungsressource, die durch eine Basisstation (102, 500, 700) gesendet werden, wobei die Konfigurationsinformationen der Uplink-Planungsressource Informationen, die zum Angeben einer Uplink-Planungsressource, die durch die Endgerätevorrichtung (101, 400, 600) zu verwenden ist, verwendet werden, und Informationen umfassen, die zum Angeben einer physischen Kommunikationseigenschaft der Uplink-Planungsressource verwendet werden;
Bestimmen (S202), durch die Endgerätevorrichtung (101, 400, 600), einer Datenübertragungspriorität entsprechend jedem von N logischen Kanälen;
Laden (S203), durch die Endgerätevorrichtung (101, 400, 600), von Daten auf M logischen Kanälen in den N logischen Kanälen in eine Medienzugangssteuerungs-Protokolldateneinheit (MAC-PDU) basierend auf der Datenübertragungspriorität entsprechend jedem der N logischen Kanäle, wobei M eine ganze Zahl ist, die kleiner als oder gleich N ist; und
Senden (S204), durch die Endgerätevorrichtung (101, 400, 600), der MAC-PDU an der Uplink-Planungsressource unter Verwendung der physischen Kommunikationseigenschaft der Uplink-Planungsressource,
wobei das Bestimmen (S202), durch die Endgerätevorrichtung (101, 400, 600), der Datenübertragungspriorität entsprechend jedem von N logischen Kanälen Folgendes umfasst:
wenn eine beliebige von mindestens einer physischen Kommunikationseigenschaft entsprechend einem logischen Kanal A mit der physischen Kommunikationseigenschaft der Uplink-Planungsressource konsistent ist und keine entsprechende physische Kommunikationseigenschaft für einen logischen Kanal B konfiguriert ist, oder
wenn eine beliebige von mindestens einer physischen Kommunikationseigenschaft entsprechend dem logischen Kanal A mit der physischen Kommunikationseigenschaft der Uplink-Planungsressource konsistent ist und jede von mindestens einer physischen Kommunikationseigenschaft entsprechend dem logischen Kanal B mit der physischen Kommunikationseigenschaft der Uplink-Planungsressource inkonsistent ist,
Bestimmen, durch die Endgerätevorrichtung (101, 400, 600), dass die Datenübertragungspriorität des logischen Kanals A die erste Datenübertragungspriorität ist und dass die Datenübertragungspriorität des logischen Kanals B die zweite Datenübertragungspriorität ist, wobei
die erste Datenübertragungspriorität höher als die zweite Datenübertragungspriorität ist, und wobei
die Daten auf dem logischen Kanal A bevorzugt in die MAC-PDU geladen werden, und der logische Kanal A und der logische Kanal B zwei beliebige der N logischen Kanäle sind.

2. Verfahren nach Anspruch 1, wobei das Verfahren vor dem Bestimmen (S202), durch die Endgerätevorrichtung (101, 400, 600), der Datenübertragungspriorität entsprechend jedem der N logischen Kanäle ferner Folgendes umfasst:
Empfangen, durch die Endgerätevorrichtung (101, 400, 600), einer Korrespondenz, die durch die Basisstation (102, 500, 700) gesendet wird, wobei die Korrespondenz Informationen umfasst, die zum Angeben einer Korrespondenz zwischen N1 logischen Kanälen in den N logischen Kanälen und einer physischen Kommunikationseigenschaft verwendet werden, wobei die physische Kommunikationseigenschaft zum Angeben eines Bitübertragungsschichtparameters verwendet wird, der bevorzugt verwendet wird, wenn Daten auf einem entsprechenden logischen Kanal gesendet werden, und wobei N1 eine ganze Zahl kleiner als oder gleich N ist.

3. Endgerätevorrichtung (101, 400), umfassend:
ein Empfangsmodul (401, 405), das zum Empfangen von Konfigurationsinformationen einer Uplink-Planungsressource, die durch eine Basisstation (102, 500, 700) gesendet werden, konfiguriert ist, wobei die Konfigurationsinformationen der Uplink-Planungsressource Informationen, die zum Angeben einer Uplink-Planungsressource, die durch die Endgerätevorrichtung (101, 400) zu verwenden ist, verwendet werden, und Informationen umfassen, die zum Angeben einer physischen Kommunikationseigenschaft der Uplink-Planungsressource verwendet werden;
ein Bestimmungsmodul (402, 406), das zum Bestimmen einer Datenübertragungspriorität entsprechend jedem von N logischen Kanälen konfiguriert ist;
wobei das Bestimmungsmodul (402, 406) ferner zum Laden von Daten auf M logischen Kanälen in den N logischen Kanälen in eine Medienzugangssteuerungs-Protokolldateneinheit (MAC-PDU) basierend auf der Datenübertragungspriorität entsprechend jedem der N logischen Kanäle konfiguriert ist, wobei M eine ganze Zahl ist, die kleiner als oder gleich N ist; und
ein Sendemodul (404), das zum Senden der MAC-PDU an der Uplink-Planungsressource unter Verwendung der physischen Kommunikationseigenschaft der Uplink-Planungsressource konfiguriert ist,
wobei das Bestimmungsmodul (402, 406) ferner zu Folgendem konfiguriert ist:
wenn eine beliebige von mindestens einer physischen Kommunikationseigenschaft entsprechend einem logischen Kanal A mit der physischen Kommunikationseigenschaft der Uplink-Planungsressource konsistent ist und keine entsprechende physische Kommunikationseigenschaft für den logischen Kanal B konfiguriert ist, oder
wenn eine beliebige von mindestens einer physischen Kommunikationseigenschaft entsprechend dem logischen Kanal A mit der physischen Kommunikationseigenschaft der Uplink-Planungsressource konsistent ist und jede von mindestens einer physischen Kommunikationseigenschaft entsprechend dem logischen Kanal B mit der physischen Kommunikationseigenschaft der Uplink-Planungsressource inkonsistent ist,
Bestimmen, dass die Datenübertragungspriorität des logischen Kanals A die erste Datenübertragungspriorität ist und dass die Datenübertragungspriorität des logischen Kanals B die zweite Datenübertragungspriorität ist, wobei
die erste Datenübertragungspriorität höher als die zweite Datenübertragungspriorität ist, und wobei
die Daten auf dem logischen Kanal A bevorzugt in die MAC-PDU geladen werden, und der logische Kanal A und der logische Kanal B zwei beliebige der N logischen Kanäle sind.

4. Endgerätevorrichtung (101, 400) nach Anspruch 3, wobei, bevor das Bestimmungsmodul (402, 406) die Datenübertragungspriorität entsprechend jedem der N logischen Kanäle bestimmt,
das Empfangsmodul (401, 405) ferner zum Empfangen einer Korrespondenz, die durch die Basisstation (102, 500, 700) gesendet wird, konfiguriert ist, wobei die Korrespondenz Informationen umfasst, die zum Angeben einer Korrespondenz zwischen N1 logischen Kanälen in den N logischen Kanälen und einer physischen Kommunikationseigenschaft verwendet werden, wobei die physische Kommunikationseigenschaft zum Angeben eines Bitübertragungsschichtparameters verwendet wird, der bevorzugt verwendet wird, wenn Daten auf einem entsprechenden logischen Kanal gesendet werden, und wobei N1 eine ganze Zahl kleiner als oder gleich N ist.

## Revendications

1. Procédé de transmission de paquets de données, comprenant :
la réception (S201), par un dispositif terminal (101, 400, 600), d'informations de configuration de ressource de planification de liaison montante envoyées par une station de base (102, 500, 700), dans lequel les informations de configuration de ressource de planification de liaison montante comprennent des informations utilisées pour indiquer une ressource de planification de liaison montante à utiliser par le dispositif terminal (101, 400, 600) et des informations utilisées pour indiquer une caractéristique de communication physique de la ressource de planification de liaison montante ;
la détermination (S202), par le dispositif terminal (101, 400, 600), d'une priorité de transmission de données correspondant à chacun de N canaux logiques ;
le chargement (S203), par le dispositif terminal (101, 400, 600), de données sur M canaux logiques dans les N canaux logiques dans une unité de données de protocole de commande d'accès au support, MAC PDU, sur la base de la priorité de transmission de données correspondant à chacun des N canaux logiques, dans lequel M est un entier inférieur ou égal à N ; et
l'envoi (S204), par le dispositif terminal (101, 400, 600), de la MAC PDU sur la ressource de planification de liaison montante en utilisant la caractéristique de communication physique de la ressource de planification de liaison montante,
dans lequel la détermination (S202), par le dispositif terminal (101, 400, 600), de la priorité de transmission de données correspondant à chacun de N canaux logiques comprend :
quand l'une quelconque d'au moins une caractéristique de communication physique correspondant au canal logique A est cohérente avec la caractéristique de communication physique de la ressource de planification de liaison montante, et aucune caractéristique de communication physique correspondante n'est configurée pour un canal logique B, ou
quand l'une quelconque d'au moins une caractéristique de communication physique correspondant au canal logique A est cohérente avec la caractéristique de communication physique de la ressource de planification de liaison montante, et chacune d'au moins une caractéristique de communication physique correspondant au canal logique B est incohérente avec la caractéristique de communication physique de la ressource de planification de liaison montante,
la détermination, par le dispositif terminal (101, 400, 600), que la priorité de transmission de données du canal logique A est la première priorité de transmission de données et que la priorité de transmission de données du canal logique B est la seconde priorité de transmission de données, dans lequel
la première priorité de transmission de données est plus élevée que la seconde priorité de transmission de données, et dans lequel
les données sur le canal logique A sont chargées préférentiellement dans la MAC PDU, et le canal logique A et le canal logique B sont deux quelconques des N canaux logiques.

2. Procédé selon la revendication 1, dans lequel, avant la détermination (S202), par le dispositif terminal (101, 400, 600), de la priorité de transmission de données correspondant à chacun des N canaux logiques, le procédé comprend en outre :
la réception, par le dispositif terminal (101, 400, 600), d'une correspondance envoyée par la station de base (102, 500, 700), dans lequel la correspondance comprend des informations utilisées pour indiquer une correspondance entre N1 canaux logiques dans les N canaux logiques et une caractéristique de communication physique, la caractéristique de communication physique est utilisée pour indiquer un paramètre de couche physique qui est utilisée préférentiellement quand des données sur un canal logique correspondant sont envoyées, et N1 est un entier inférieur ou égal à N.

3. Dispositif terminal (101, 400) comprenant :
un module de réception (401, 405) configuré pour recevoir des informations de configuration de ressource de planification de liaison montante envoyées par une station de base (102, 500, 700), dans lequel les informations de configuration de ressource de planification de liaison montante comprennent des informations utilisées pour indiquer une ressource de planification de liaison montante à utiliser par le dispositif terminal (101, 400) et des informations utilisées pour indiquer une caractéristique de communication physique de la ressource de planification de liaison montante ;
un module de détermination (402, 406) configuré pour déterminer une priorité de transmission de données correspondant à chacun de N canaux logiques ;
le module de détermination (402, 406) étant configuré en outre pour charger des données sur M canaux logiques dans les N canaux logiques dans une unité de données de protocole de commande d'accès au support, MAC PDU, sur la base de la priorité de transmission de données correspondant à chacun des N canaux logiques, dans lequel M est un entier inférieur ou égal à N ; et
un module d'envoi (404) configuré pour envoyer la MAC PDU sur la ressource de planification de liaison montante en utilisant la caractéristique de communication physique de la ressource de planification de liaison montante,
dans lequel le module de détermination (402, 406) est configuré en outre pour :
quand l'une quelconque d'au moins une caractéristique de communication physique correspondant au canal logique A est cohérente avec la caractéristique de communication physique de la ressource de planification de liaison montante, et aucune caractéristique de communication physique correspondante n'est configurée pour le canal logique B, ou
quand l'une quelconque d'au moins une caractéristique de communication physique correspondant au canal logique A est cohérente avec la caractéristique de communication physique de la ressource de planification de liaison montante, et chacune d'au moins une caractéristique de communication physique correspondant au canal logique B est incohérente avec la caractéristique de communication physique de la ressource de planification de liaison montante,
déterminer que la priorité de transmission de données du canal logique A est la première priorité de transmission de données et que la priorité de transmission de données du canal logique B est la seconde priorité de transmission de données, dans lequel
la première priorité de transmission de données est plus élevée que la seconde priorité de transmission de données, et dans lequel
les données sur le canal logique A sont chargées préférentiellement dans la MAC PDU, et le canal logique A et le canal logique B sont deux quelconques des N canaux logiques.

4. Dispositif terminal (101, 400) selon la revendication 3, dans lequel, avant que le module de détermination (402, 406) détermine la priorité de transmission de données correspondant à chacun des N canaux logiques,
le module de réception (401, 405) est configuré en outre pour recevoir une correspondance envoyée par la station de base (102, 500, 700), dans lequel la correspondance comprend des informations utilisées pour indiquer une correspondance entre N1 canaux logiques dans les N canaux logiques et une caractéristique de communication physique, la caractéristique de communication physique est utilisée pour indiquer un paramètre de couche physique qui est utilisé préférentiellement quand des données sur un canal logique correspondant sont envoyées, N1 est un entier inférieur ou égal à N.
